# EUROPEAN PATENT APPLICATION

(11) **EP 2 664 987 A1**
(43) Date of publication of application: **20.11.2013**
(21) Application number: 12734144.4
(22) Date of filing: 11.01.2012
(51) Int. Cl.: G06F 3/06, G06F 13/10

(54) **OPTICAL DISK ARRAY DEVICE**

(30) Priority: 12.01.2011 JP 2011003583; 18.01.2011 JP 2011007441
(71) Applicant: Panasonic Corporation, Osaka 571-8501 (JP)
(72) Inventor: KIMURA, Naohiro, Oska 540-6207 (JP); YAMAMOTO, Yoshikazu, Osaka 540-6207 (JP); ITO, Motoshi, Osaka 540-6207 (JP)
(74) Representative: Grünecker, Kinkeldey, Stockmair & Schwanhäusser
(86) International application number: PCT/JP2012/000119
(87) International publication number: WO 2012/096167

(57) **Abstract**

When RAID is constructed by using optical disks of the same lot, there is a problem in that the reproduction error probability of the RAID may have local increases over the reproduction error probability within the optical disks. According to the present invention, among a plurality of optical disks constituting an optical disk array, the smallest logical sector number is assigned to mutually different physical sector numbers. As a result, data in the same stripe is allowed to be recorded to sectors at mutually different physical sector numbers of the plurality of optical disks, so that the probability of occurrence of read errors due to interferences of adjacent guide grooves and/or insufficient formation of guide grooves can be leveled out, and the maximum probability of read errors can be kept small.

## Description

### TECHNICAL FIELD

The present invention relates to a data storage using a plurality of storage devices.

### BACKGROUND ART

In recent years, large amounts of data are coming to be stored on storage servers via networks. At storage servers, hard disks are generally used storage devices. Since a hard disk is a storage device which is relatively susceptible to malfunctioning, reliability of the stored data is ensured by constructing RAID (Redundant Arrays of Inexpensive Disks) imparted with redundancy. For example, RAID1, RAIDS, and RAID6 are in use as redundancy-imparted constructions.

Moreover, in order to reduce any increase in energy consumption caused by the increasing amounts of stored data, there is a growing need for energy saving. In order to achieve these, storage servers which are capable of storing data with less energy are being desired. For example, optical disks are drawing attention as storage means that are capable of storing data with less energy than that for hard disks.

In an optical disk, errors may occur in the reproduced data owing to various stress factors, such as stress associated with the removable medium or stress associated with the fabrication process. Therefore, the recording data is protected by the use of powerful error correcting codes. Factors causing errors may be scratches or soil on the optical disk, quality at recording, degradation over time, and the like. Moreover, a recordable-type optical disk has meandering guide grooves and/or prepits previously formed thereon for rotation synchronization and address confirmation at data recording, and these may affect the RF signal and cause errors. For example, a method for reducing the influence of prepits is disclosed in Patent Document 1. Moreover, interferences of adjacent guide grooves and/or insufficient formation of guide grooves may also affect the RF signal.

### CITATION LIST

### PATENT LITERATURE

[Patent Document 1] Japanese Laid-Open Patent Publication No. 2002-32918
[Patent Document 2] Japanese Laid-Open Patent Publication No. 2002-93056
[Patent Document 3] Japanese Laid-Open Patent Publication No. 11-25574

### SUMMARY OF INVENTION

### TECHNICAL PROBLEM

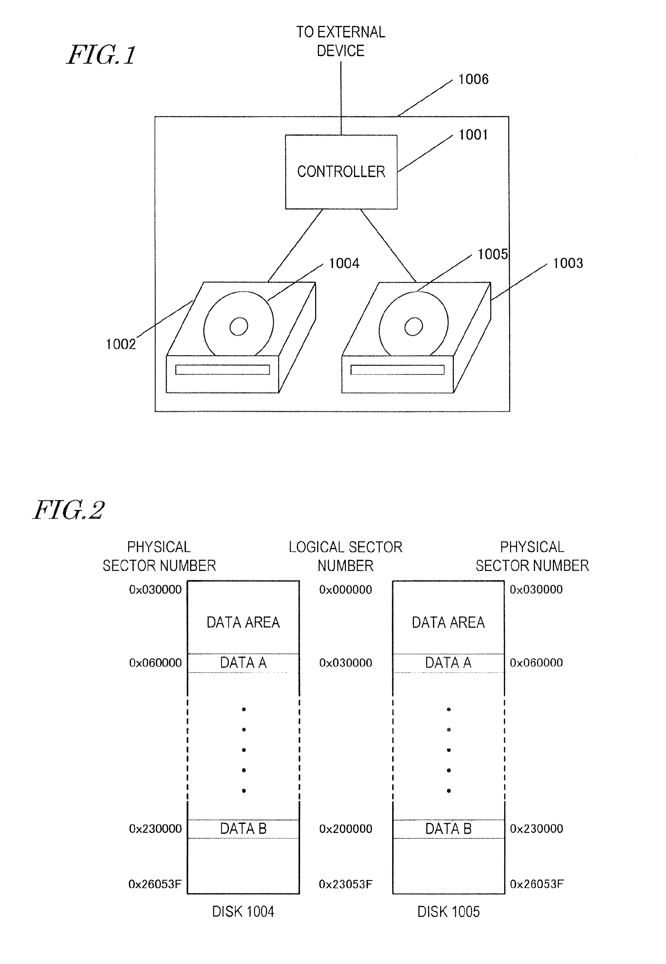

A disk array apparatus in which optical disks are used to construct RAID1 is described with reference to FIG. **1** and FIG. **2.** FIG. **1** is a construction diagram of a disk array apparatus in which optical disks are used. The disk array apparatus **1006** includes a controller **1001,** and drives **1002** and **1003.** Optical disks **1004** and **1005** are mounted in the drives **1002** and **1003.** The aggregate of optical disks **1004** and **1005** is referred to as a disk array.

Recording data from an external device (not shown) for the disk array apparatus **1006** is input to the controller **1001** together with logical addresses which are assigned in a user data space of the disk array. Herein, it is assumed that a logical address is assigned for every sector size that defines the smallest unit in a recording command for the drives **1002** and **1003.** Generally speaking, the sector size is often selected to be 512 bytes for hard disks, and 2048 bytes for optical disks.

According to a predetermined relationship, the controller **1001** converts a logical address to a logical sector number which is assigned in the user data space of each optical disk. Then, 'to a drive corresponding to the optical disk **1004** or **1005,** a recording command for the logical sector number into which the logical address has been converted is issued. When receiving the recording command from the controller **1001,** in accordance with management information concerning positioning of regions of a mounted optical disk, the drive **1002** or **1003** converts the logical sector number into a physical sector number which uniquely represents a physical position on the optical disk. In an optical disk, error correcting coding is performed on a block-by-block basis, each block consisting of several sectors, this being in order to cope with relatively long pieces of soil, e.g., adhesion of fingerprints. Therefore, as necessary, the data of a corresponding block containing the sector of the physical sector number for recording is once reproduced, and the data of the sector at the corresponding physical sector number is altered and then the recording data is written back in a block-by-block manner, thus executing a record at the corresponding logical sector. This is a so-called read-modify-write operation. Note that a block often consists of 16 or 32 sectors.

In FIG. **2****,** the same range of physical sector numbers is assigned to the data area of each of the optical disk **1004** and the optical disk **1005.** Hereinafter, an explanation will be offered by giving specific sector numbers and addresses, where any 0x at the beginning is an indication of a hexadecimal. RAID1, which is also called mirroring, records the same data to a plurality of storage devices. The controller **1001** adopts the intact value of the input logical address as the logical sector number for the optical disk **1004** and the optical disk **1005,** and issues a recording command for both of the drive **1002** and the drive **1003.** For example, as shown in FIG. **2****,** recording data A for a logical address 0x030000 is allocated to a logical sector number 0x030000, so as to be recorded at a sector of the physical sector number 0x060000 of the optical disk **1004** and at a sector of the physical sector number 0x060000 of the optical disk **1005.** Moreover, recording data B for a logical address 0x200000 is allocated to a logical sector number 0x200000, so as to be recorded at a sector of the physical sector number 0x230000 of the optical disk **1004** and at a sector of the physical sector number 0x230000 of the optical disk **1005.**

When constructing RAID, storage devices of the same capacity are generally to be used. Furthermore, in order to enhance the stability of the entire system, it is supposedly desirable that the storage devices used have the same degree of reliability (typically the same lot of the same product). When constructing RAID by using optical disks, it is supposedly desirable that those with the same degree of reliability (typically the same lot of the same product) are selected not only as the devices to be used, but also as the optical disks to be used in the respective devices.

In optical disks, a large amount of optical disks are produced from one stamper. Since the positions of guide grooves and/or prepits are determined by the stamper that is used in an injection molding machine, the guide grooves and/or prepits of any optical disks which are produced from the same stamper have entirely identical positions. In other words, between optical disks of the same lot, the positions of the previously-formed guide grooves and/or prepits are entirely identical. That is, in optical disks of the same lot, the same level of interferences of adjacent guide grooves and/or insufficient formation of guide grooves will exist at entirely identical positions.

However, since RAID has been devised for hard disks, in the aforementioned construction, data which is allocated to a predetermined logical address will be recorded at sectors of the same physical sector number on the two optical disks **1004** and **1005.** For example, when optical disks which are liable to reproduction errors with an average probability of 1% are used, there is an average probability of 0.01% that data cannot be reproduced from a RAID1 that is constructed with the two storage devices. On the other hand, given a 1.5% probability of suffering from reproduction errors at places where errors are likely to occur due to interferences of adjacent guide grooves, the probability that any data that is recorded at such portions has reproduction errors will increase to 0.0225%. For example, assume that the sector of the physical sector number 0x060000 of the optical disk **1004** has an average reproduction error probability of 1%, and that the sector of the physical sector number 0x230000 has a reproduction error probability of 1.5%, which is 1.5 times the average, due to interferences of adjacent guide grooves. If the optical disks **1004** and **1005** are optical disks of the same lot, the reproduction error probability at the sector of the physical sector number 0x060000 of the optical disk **1005** is also 1%, and the reproduction error probability at the sector of the physical sector number 0x230000 is also 1.5%. As a result, while data A being allocated to the logical address 0x030000 has a reproduction error probability of 0.01%, data B being allocated to the logical address 0x200000 has an increased reproduction error probability of 0.0225%, which is more than twofold.

Thus, when RAID is constructed by using optical disks of the same lot, there is a problem in that the probability oscillation of reproduction errors within the optical disks is increased.

Next, a problem of the case where a RAIDS system is constructed with disk devices will be described.

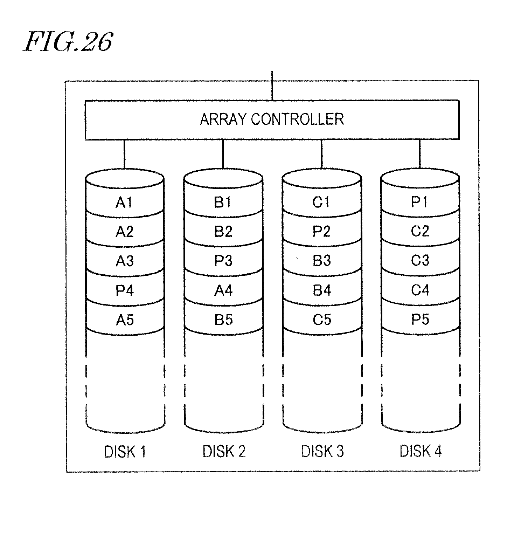

FIG. **26** shows an example of a RAIDS system which is constructed with four disk devices. In RAID, the storage region of a disk device is kept under management while being divided into blocks of a size which is equal to the logical sector size or a multiple of the logical sector size. The size of a block is called the stripe size. In FIG. **26****,** blocks Ai, Bi, Ci, and Pi (i=1, 2, 3, ···) constitute one stripe. A block Pi is a parity block, where a result of calculating an exclusive OR of the data which are at the same byte position in the blocks Ai, Bi, and Ci is stored.

In RAIDS, even when one disk device becomes unable to perform reproduction due to some problem, data restoration is still possible. For example, if a problem occurs in disk 3 in FIG. **26****,** making it unable to perform reproduction, block C1 can be restored by calculating an exclusive OR of the data at the byte position in blocks A1, B1, and P1.

Systems are also in use such that portable-medium type storage devices are employed in such a disk array apparatus. In a system where portable-medium type storage devices are used, a library device is employed that includes a cabinet in which a multitude of information storage media are accommodated, one or plural recording/reproduction devices which perform data read/write, and a carriage which carries a storage medium between the cabinet and the drive device. A system featuring an array structure combining a plurality of such library devices is also called RAIL (Redundant Arrays of Inexpensive Libraries).

In recent years, the amount of data that is stored in large-scale data centers is on a rapid increase, and consequently the amount of data which is not even frequently referred to tends to increase. As a device for archiving such data that is not frequently referred to, library devices of a portable medium type, which can reduce power consumption, are drawing attention.

Representative portable-type information storage media are optical disks such as the DVD (Digital Versatile Disc) and the Blu-ray Disc. In an optical disk, other than a user data region in which to store user data, a spare area is provided for allowing replacement recording of data in any defective region within the user data region. In order to reproduce or record data in the replacement-recorded region, the head needs to be moved to the spare area.

Moreover, there are optical disks having two or more recording layers, which require a focus jump upon switching between recording layers in order to focus on the recording layer in which data is to be next reproduced or recorded.

Furthermore, in order to reproduce or record data across a plurality of information storage media within a library device, it is necessary to change the information storage media in the middle of data reproduction/recording.

Thus, in portable-medium type library devices and array device of portable-medium type libraries, there may be points which do not allow continuous reproduction/recording of data, where data reproduction/recording may temporarily need to wait.

As to the spare area, a control method has been proposed which, while limiting a data read or write for the spare area, restores data from data that is reproduced from another information storage medium (see, for example, Patent Document 2).

Moreover, an apparatus has been proposed in which an extra recording/reproduction device and an extra information storage medium are provided, such that data reproduction/recording is performed on the extra information storage medium by using the extra recording/reproduction device during a period of changing information storage media (see, for example, Patent Document 3).

However, the above conventional control methods and apparatuses fail to give consideration to the time required for focus jumps upon switching between recording layers of an information storage medium having two or more recording layers, thus resulting in a problem in that data reproduction/recording temporarily needs to wait when switching between recording layers.

Moreover, the need to provide an extra recording/reproduction device and an extra information storage medium in order to continue data reproduction/recording when changing information storage media requires a complicated construction. A construction having an extra recording/reproduction device also has a problem in that, since only the recording/reproduction devices excluding the extra recording/reproduction device are used at normal times, the performance relative to the number of recording/reproduction devices is poorer.

The present invention has been made in view of the above problems, and provides an optical disk array apparatus which ensures reliability of stored data. Moreover, the present invention provides an optical disk array apparatus which can continuously perform data reproduction even upon switching between recording layers of an optical disk or when changing optical disks, without using any extra recording/reproduction devices.

### SOLUTION TO PROBLEM

An optical disk array apparatus according to the present invention is an optical disk array apparatus having a plurality of recording/reproduction devices for performing data recording and reproduction on an optical disk, the optical disk array apparatus comprising an assignment section for assigning a smallest logical sector number of an optical disk mounted in one of the plurality of recording/reproduction devices to a physical sector number that is different from a physical sector number to which a smallest logical sector number of an optical disk mounted in at least one of the other recording/reproduction devices is assigned.

In one embodiment, the assignment section assigns smallest logical sector numbers of the respective optical disks mounted in the plurality of recording/reproduction devices to mutually different physical sector numbers.

One embodiment further comprises a determination section for determining stampers used for producing the respective optical disks mounted in the plurality of recording/reproduction devices, wherein the assignment section assigns smallest logical sector numbers of optical disk sharing a same stamper to mutually different physical sector numbers.

In one embodiment, each optical disk includes a data area and a spare area; and the assignment section assigns a respectively different size for the spare area which is at a leading end of the data area of each optical disk.

In one embodiment, the assignment section ensures a size assignment so that a total of a size of the spare area at the leading end of the data area and a size of the spare area at a trailing end of the data area is mutually equal among the plurality of optical disks.

In one embodiment, each optical disk includes a data area; and in an optical disk whose smallest logical sector number is assigned to a physical sector number not corresponding to a leading end of the data area, the assignment section allows a next logical sector number to a logical sector number which is assigned to a physical sector number corresponding to a trailing end of the data area to be assigned to a physical sector number corresponding to the leading end of the data area.

An optical disk array apparatus according to the present invention is an optical disk array apparatus for reproducing data from optical disks, the optical disk array apparatus comprising a plurality of optical disk library devices each including a recording/reproduction device, a cabinet, and a carriage, the cabinet accommodating a plurality of optical disks, and the optical disk being carried by the carriage between the cabinet and the recording/reproduction device for permitting data reproduction by the recording/reproduction device, wherein, a disk array is constituted by the plurality of optical disks in the plurality of optical disk library devices; stripes are recorded in the disk array; the stripes have redundancy for enabling, when data fails to be reproduced in at least one of the plurality of optical disks in which data composing a same stripe is recorded, restoration of the data failing to be reproduced; data composing a same stripe is recorded at physically different positions of the plurality of optical disks, so that mutually different timings for optical disk changing exist among the plurality of optical disk library devices; the optical disk library device avoids reproducing data in a predetermined region range immediately after optical disk changing; and the data in the predetermined region range is restored from data reproduced by the optical disk library devices other than the optical disk library device avoiding data reproduction in the predetermined region range.

In one embodiment, the optical disk library device avoiding data reproduction in the predetermined region range performs the optical disk changing while restoring the data.

In one embodiment, each of the plurality of optical disks has a plurality of recording layers; data composing a same stripe is recorded at physically different positions of the plurality of optical disks, so that mutually different timings for recording layer switching exist among the plurality of optical disk library devices; the optical disk library device avoids reproducing data in a predetermined region range immediately after recording layer switching; and the data in the predetermined region range immediately after recording layer switching is restored from data reproduced by the optical disk library devices other than the optical disk library device avoiding data reproduction in the predetermined region range immediately after recording layer switching.

In one embodiment, while the data is being restored, the optical disk library device avoiding data reproduction in the predetermined region range immediately after recording layer switching switches recording layers and prepares itself to reproduce data in a subsequent region of the predetermined region range.

In one embodiment, the optical disks have a leading spare area and a trailing spare area; and data composing a same stripe is recorded at physically different positions of the plurality of optical disks by varying a ratio between sizes of the leading spare area and the trailing spare area among the plurality of optical disks constituting the disk array.

A reproduction method according to the present invention is a reproduction method for reproducing data from a disk array composed of a plurality of optical disks, wherein, stripes are recorded in the disk array; the stripes have redundancy for enabling, when data fails to be reproduced in at least one of the plurality of optical disks in which data composing a same stripe is recorded, restoration of the data failing to be reproduced; data composing a same stripe is recorded at physically different positions of the plurality of optical disks; and each optical disk composing the disk array is changeable to another optical disk, the reproduction method comprising: a step of avoiding data reproduction in a predetermined region range immediately after optical disk changing; and a step of restoring the data in the predetermined region range from data which is reproduced from the remaining optical disks composing the disk array excluding an optical disk in which data reproduction in the predetermined region range is avoided.

### ADVANTAGEOUS EFFECTS OF INVENTION

According to the present invention, the smallest logical sector number of an optical disk is assigned to a physical sector number that is different from a physical sector number to which the smallest logical sector number of at least another optical disk is assigned. As a result, data in the same stripe is allowed to be recorded to sectors at mutually different physical sector numbers of the plurality of optical disks. As used herein, a stripe is a unit by which data can be restored with redundancy. In RAID1, a stripe is a smallest structural unit by which the same data can be independently recorded or reproduced. In RAID4 or RAIDS, a striped is a smallest structural unit composed of a group of data which can be independently recorded or reproduced and a parity thereof. With the above features, the probability of occurrence of read errors due to interferences of adjacent guide grooves and/or insufficient formation of guide grooves can be leveled out, and the maximum probability of read errors can be kept small.

Moreover, according to the present invention, even upon switching between recording layers or when changing Optical disks, it is possible to continuously reproduce data without having to wait.

### BRIEF DESCRIPTION OF DRAWINGS

[FIG. **1**] A construction diagram of a disk array apparatus in which optical disks are used.
[FIG. **2****]** A diagram showing data recording positions in RAID1.
[FIG. **3**] A diagram showing the format of an optical disk according to Embodiment 1 of the present invention.
[FIG. **4****]** A diagram showing the format of a data zone according to Embodiment 1 of the present invention.
[FIG. **5****]** A block diagram showing the construction of an optical disk array apparatus according to Embodiment 1 of the present invention.
[FIG. **6****] (a)** to **(d)** are diagrams showing allocation of inner spare areas according to Embodiment 1 of the present invention.
[FIG. **7**] **(a)** and **(b)** are diagrams showing a stripe construction and assignment of logical addresses and logical sector numbers according to Embodiment 1 of the present invention.
[FIG. **8**] **(a)** to **(d)** are diagrams showing assignment of logical sector numbers and physical sector numbers according to Embodiment 1 of the present invention.
[FIG. **9****]** A diagram showing positioning of stripe data according to Embodiment 1 of the present invention.
[FIG. **10**] **(a)** to **(d)** are diagrams showing allocation of inner spare areas according to Embodiment 2 of the present invention.
[FIG. **11**] A block diagram showing the construction of an optical disk array apparatus according to Embodiment 3 of the present invention.
[FIG. **12****] (a)** to **(d)** are diagrams assignment of physical sector numbers for the logical sector number 0x000000 according to Embodiment 3 of the present invention.
[FIG. **13**] **(a)** to **(d)** are diagrams showing assignment of logical sector numbers and physical sector numbers according to Embodiment 3 of the present invention.
[FIG. **14****]** A diagram showing positioning of stripe data according to Embodiment 3 of the present invention.
[FIG. **15****]** A diagram showing the construction of an information storage medium library array apparatus according to Embodiment 4 of the present invention.
[FIG. **16****]** A diagram showing data positioning of an information storage medium according to Embodiment 4 of the present invention.
[FIG. **17**] A diagram showing a state of stripes near switching between recording layers of information storage media according to Embodiment 4 of the present invention.
[FIG. **18****]** A diagram showing data positioning of an information storage medium having spare areas according to Embodiment 4 of the present invention.
[FIG. **19**] A flowchart showing a reproduction operation according to Embodiment 4 of the present invention.
[FIG. **20**] A diagram showing data positioning of information storage medium sets according to Embodiment 5 of the present invention.
[FIG. **21**] A diagram showing a state of stripes in regions that are reproduced before or after changes of the information storage media in information storage medium sets according to Embodiment 5 of the present invention.
[FIG. **22****]** A flowchart showing a reproduction operation according to Embodiment 5 of the present invention.
[FIG. **23**] A diagram showing data positioning of information storage medium sets according to Embodiment 6 of the present invention.
[FIG. **24****]** A flowchart showing a reproduction operation according to Embodiment 6 of the present invention.
[FIG. **25****]** A diagram showing an example data positioning of information storage medium sets having spare areas according to Embodiment 6 of the present invention.
[FIG. **26****]** A diagram showing an exemplary construction of a RAIDS system.

### DESCRIPTION OF EMBODIMENTS

Hereinafter, embodiments of the present invention will be described with reference to the drawings.

### (Embodiment 1)

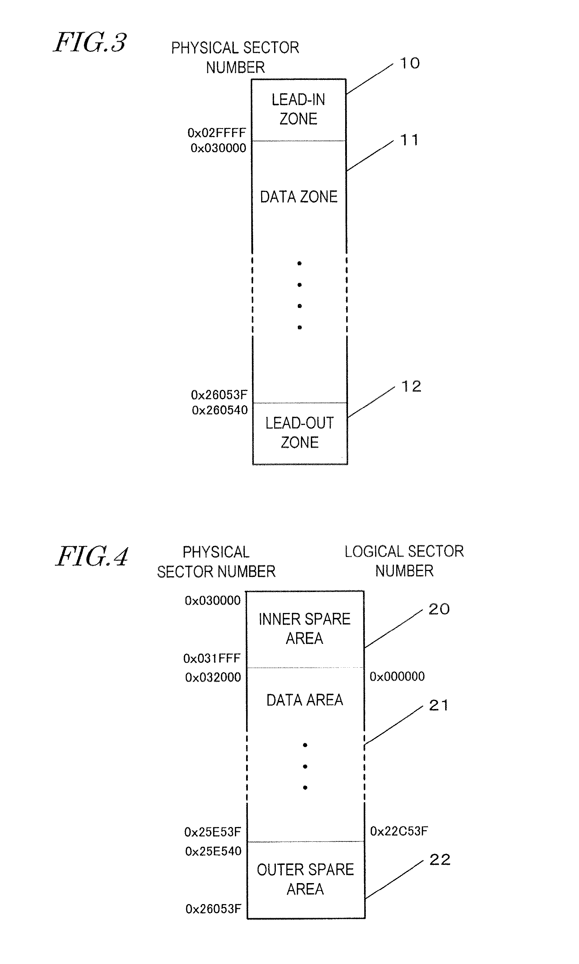

FIG. **3** is a diagram for describing the format of an optical disk according to Embodiment 1 of the present invention. The optical disk includes a lead-in zone **10,** a data zone **11,** and a lead-out zone **12.** FIG. **4** is a diagram for describing the format of the data zone **11** according to Embodiment 1 of the present invention. The data zone **11** includes an inner spare area **20,** a data area **21,** and an outer spare area **22.** The inner spare area **20** is exemplary of a spare area that is located closer to the leading end than is the data area **21** along the direction of track recording/reproduction. The outer spare area **22** is exemplary of a spare area that is located closer to the trailing end than is the data area **21** along the direction of track recording/reproduction.

The lead-in zone **10** includes test areas for performing tests at production of the optical disk and upon recording in a drive, a management area in which to record management information concerning the format of the data zone **11,** and the like. User data is to be recorded in the data zone **11.** Similarly to the lead-in zone **10,** the lead-out zone **12** also includes test areas for performing tests at production of the optical disk and upon recording in a drive, and so on.

In the case of an optical disk which supports replacement recording, the data zone **11** is further divided into the inner spare area **20,** the data area **21,** and an outer data area **22.** For example, the inner spare area **20** is allocated to sectors of physical sector numbers 0x030000 to 0x031FFF. The data area **21** is allocated to sectors of physical sector numbers 0x032000 to 0x25E53F. The outer spare area **22** is allocated to sectors of physical sector numbers 0x25E540 to 0x26053F.

User data is recorded in the data area **21.** Generally, logical sector numbers beginning from 0x000000 are consecutively assigned from the leading end of the data area **21.** Such assignments are part of the management information, and recorded in a management information area within the lead-in zone **10.**

If a recording to the data area **21** fails, the data whose recording has failed is replacement-recorded to the inner spare area **20** or the outer spare area **22.** For example, if a recording to a sector of the physical sector number 0x033000, which is assigned to the logical sector number 0x001000, fails, then a sector of an unused physical sector number (e.g., 0x030000) is selected from the inner spare area **20,** and the data allocated to the logical sector number 0x001000 is recorded to the sector of the physical sector number 0x030000. Furthermore, the fact that the data to have been recorded to the sector of the physical sector number 0x033000 is replacement-recorded to the sector of the physical sector number 0x030000 is recorded, as management information, in the lead-in zone **10.**

A replacement recording may also be performed in cases other than a failure in recording. For example, it may be performed when, upon trying to read from a recorded portion immediately after the recording, the read does not occur correctly. Moreover, a replacement recording may be performed when a predetermined number of errors or more exist when a recorded portion is read, or when a measured value of recording quality is poorer than a predetermined value.

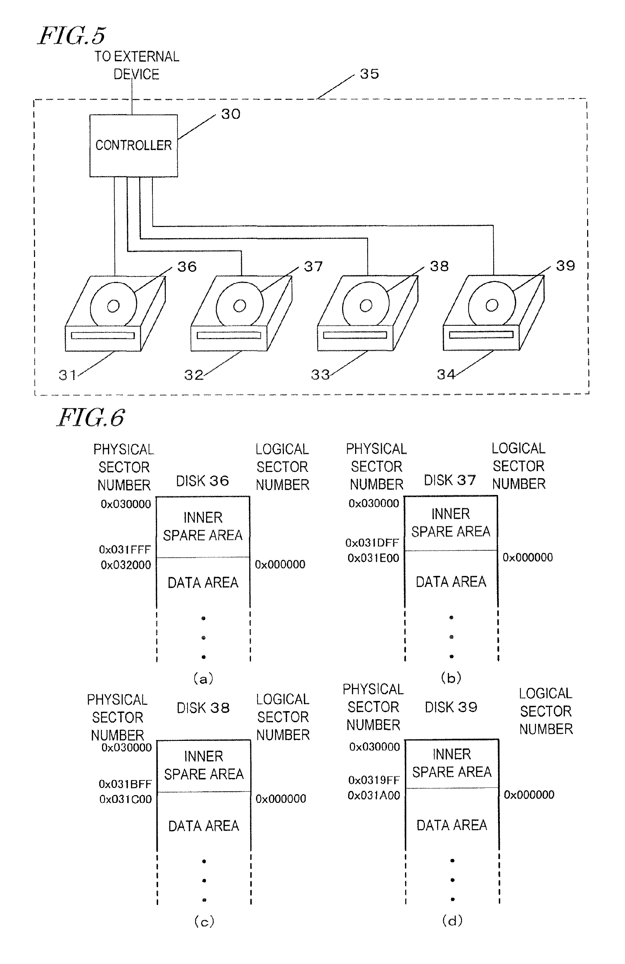

Next, an optical disk array apparatus according to Embodiment 1 of the present invention will be described with reference to FIG. **5.** FIG. **5** is a block diagram showing the construction of an optical disk array apparatus **35** according to Embodiment 1 of the present invention. The optical disk array apparatus **35** includes a controller **30** and drives **31** to **34.** Optical disks **36** to **39** are mounted in the drives **31** to **34.** The aggregate of optical disks **36** to **39** will be referred to as an optical disk array.

The optical disk array apparatus **35** is connected to an external device (not shown) via the controller **30,** so that the whole functions as RAID4. For any recording data which is input from the external device, the controller **30** determines, on the basis of a logical address, a drive and a logical sector number to which it is to be recorded, and issues a recording command to the corresponding drive **31** to **33.** Furthermore, a recording command for parity data, which is generated from the recording data that is input from the external device, is issued to the drive **34.** In accordance with the recording commands from the controller **30,** the drives **31** to **34** record the recording data and the parity data to the mounted optical disks **36** to **39.**

Moreover, before a first recording is performed for the mounted optical disks **36** to **39,** the drives **31** to **34** format the optical disks to allocate the inner spare area **20,** the data area **21,** and the outer spare area **22.** Prior to formatting, the controller **30** designates respectively different sizes of inner spare areas **20** to the drives **31** to **34.**

An example thereof will be described with reference to FIG. **6.** FIG. **6** is a diagram showing allocation of inner spare areas **20** according to Embodiment 1 of the present invention. In accordance with an instruction from the controller **30,** the drive **31** allocates sectors of the physical sector numbers 0x030000 to 0x031FFF of the optical disk **36** as the inner spare area **20,** as shown in FIG. **6(a)****.** As shown in FIG. **6(b)****,** the drive **32** allocates sectors of the physical sector numbers 0x030000 to 0x031DFF of the optical disk **37** as the inner spare area **20.** As shown in FIG. **6(c)****,** the drive **33** allocates sectors of the physical sector numbers 0x030000 to 0x031BFF of the optical disk **38** as the inner spare area 20. As shown in FIG. **6(d)****,** the drive **34** allocates sectors of the physical sector numbers 0x030000 to 0x0319FF of the optical disk **39** as the inner spare area **20.**

Thus, respectively different sizes are allocated for the spare areas of the optical disks **36** to **39.**

Moreover, as shown in FIG. **6****,** the smallest logical sector number, i.e., the logical sector number 0x000000, is assigned to mutually different physical sector numbers in the optical disks **36** to **39.**

Specifically, in the optical disk **36,** the smallest logical sector number, i.e., the logical sector number 0x000000, is assigned to the physical sector number 0x032000. In the optical disk **37,** the smallest logical sector number, i.e., the logical sector number 0x000000, is assigned to the physical sector number 0x031E00. In the optical disk **38,** the smallest logical sector number, i.e., the logical sector number 0x000000, is assigned to the physical sector number 0x031C00. In the optical disk **39,** the smallest logical sector number, i.e., the logical sector number 0x000000, is assigned to the physical sector number 0x031A00.

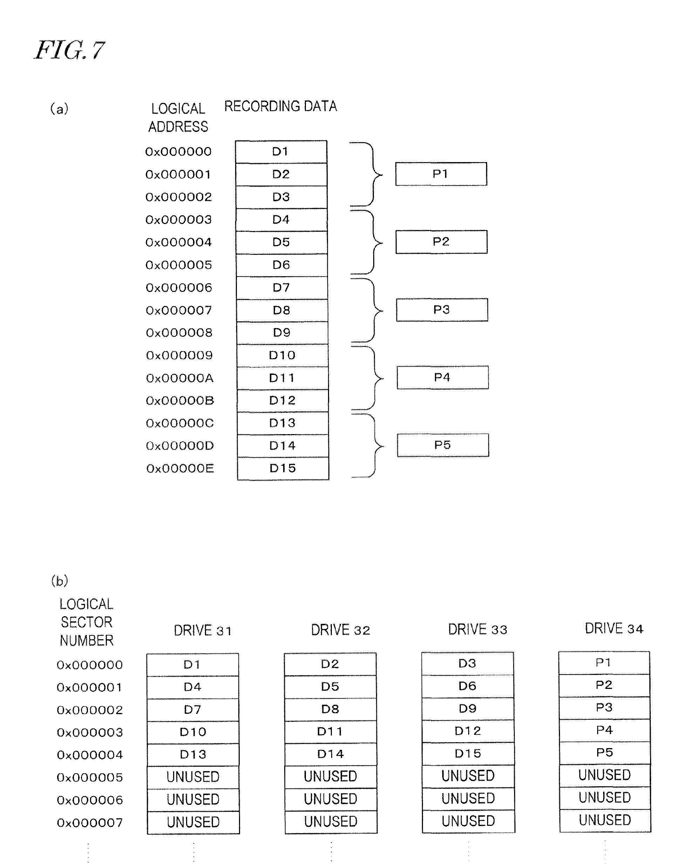

Next, with reference to FIG. **7****,** a stripe construction and assignment of logical addresses and logical sector numbers will be described. As used herein, a stripe is a unit by which data can be restored with redundancy. In RAID1, a stripe is a smallest structural unit by which the same data can be independently recorded or reproduced. In RAID4 or RAIDS, a stripe is a smallest structural unit composed of a group of data which can be independently recorded or reproduced and a parity thereof.

FIGS. **7(a)** and **(b)** are diagrams showing a stripe construction and assignment of logical addresses and logical sector numbers according to Embodiment 1 of the present invention. Recording data **D1** to **D15** for logical addresses 0x000000 to 0x00000E of the optical disk array are input from the external device to the controller **30.** The controller **30** generates a parity **P1** from **D1** to **D3,** a parity **P2** from **D4** to **D6,** a parity **P3** from **D7** to **D9,** a parity **P4** from **D10** to **D12,** and a parity **P5** from **D13** to **D15.** As a result, five stripes **(D1** to **D3, P1), (D4** to **D6, P2),** (**D7** to **D9, P3**), **(D10** to **D12, P4**), **(D13** to **D15, P5**) are made.

The controller **30** allocates the recording data **D1** to **D15** and the parity data **P1** to **P5** to logical sector numbers of the optical disks **36** to **39** in such a manner that the data composing the same stripe will be recorded on respectively different optical disks, and issues a recording command to the drives **31** to **34.** The recording data **D1, D4, D7, D10,** and **D13** are allocated to logical sector numbers 0x000000 to 0x000004 of the optical disk **36,** and transferred to the drive **31.** The recording data **D2, D5, D8, D11,** and **D14** are allocated to logical sector numbers 0x000000 to 0x000004 of the optical disk **37,** and transferred to the drive **32.** The recording data **D3, D6, D9, D12,** and **D15** are allocated to logical sector numbers 0x000000 to 0x000004 of the optical disk **38,** and transferred to the drive **33.** The parity data **P1, P2, P3, P4,** and **P5** are allocated to logical sector numbers 0x000000 to 0x000004 of the optical disk **39,** and transferred to the drive **34.**

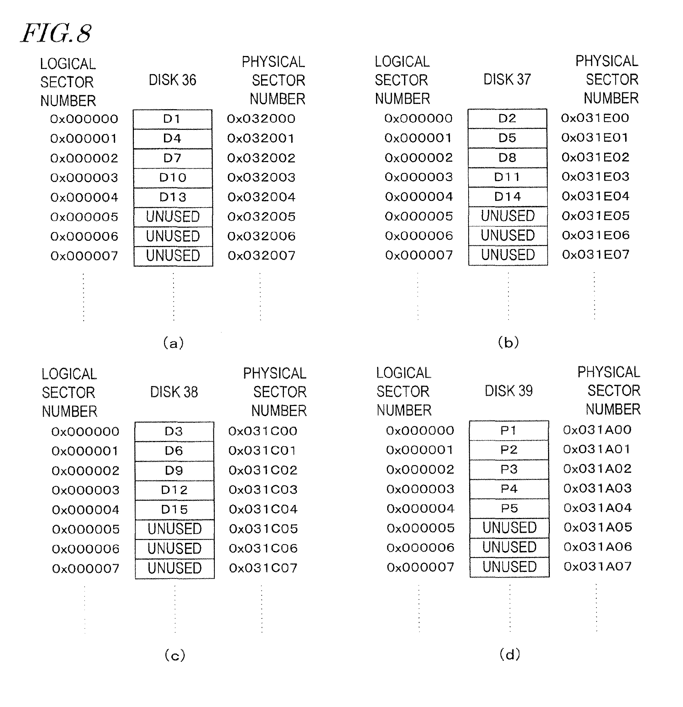

The relationship between the logical sector numbers which are assigned to recording data and parity data and the physical sector numbers at which such data are actually recorded will be described with reference to FIG. **8.** FIG. **8** is a diagram of assignment of logical sector numbers and physical sector numbers according to Embodiment 1 of the present invention.

The recording data **D1** is recorded at a sector of the physical sector number 0x032000 of the optical disk **36.** The recording data **D2** is recorded at a sector of the physical sector number 0x031E00 of the optical disk **37.** The recording data D3 is recorded at a sector of the physical sector number 0x031C00 of the optical disk **38.** The recording data **D4** is recorded at a sector of the physical sector number 0x032001 of the optical disk **36.** The recording data **D5** is recorded at a sector of the physical sector number 0x031E01 of the optical disk **37.** The recording data **D6** is recorded at a sector of the physical sector number 0x031C01 of the optical disk **38.** The recording data **D7** is recorded at a sector of the physical sector number 0x032002 of the optical disk **36.** The recording data **D8** is recorded at a sector of the physical sector number 0x031E02 of the optical disk **37.** The recording data **D9** is recorded at a sector of the physical sector number 0x031C02 of the optical disk **38.** The recording data **D10** is recorded at a sector of the physical sector number 0x032003 of the optical disk **36.** The recording data **D11** is recorded at a sector of the physical sector number 0x031E03 of the optical disk **37.** The recording data **D12** is recorded at a sector of the physical sector number 0x031C03 of the optical disk **38.** The recording data **D13** is recorded at a sector of the physical sector number 0x032004 of the optical disk **36.** The recording data **D14** is recorded at a sector of the physical sector number 0x031E04 of the optical disk **37.** The recording data **D15** is recorded at a sector of the physical sector number 0x031C04 of the optical disk **38.** The parity data **P1** is recorded at a sector of the physical sector number 0x031A00 of the optical disk **39.** The parity data **P2** is recorded at a sector of the physical sector number 0x031A01 of the optical disk **39.** The parity data **P3** is recorded at a sector of the physical sector number 0x031A02 of the optical disk **39.** The parity data **P4** is recorded at a sector of the physical sector number 0x031A03 of the optical disk **39.** The parity data **P5** is recorded at a sector of the physical sector number 0x031A04 of the optical disk **39.**

Since the recording data which are recorded in this manner constitute RAID4, even if one piece of recording data in the same stripe becomes unable to read, it can be restored from the other recording data and the parity data in that stripe. For example, if **D3** becomes unable to read, **D3** can be determined and restored through calculation from the other recording data and the parity data (**D1**, **D2, P1**) in the stripe that contains **D3.**

As described above, the optical disk array apparatus of the present embodiment includes a plurality of recording/reproduction devices (drives) which record and reproduce data on optical disks. Moreover, the optical disk array apparatus of the present embodiment includes an assignment section (controller **30**). In this state, for the respective optical disks mounted in the recording/reproduction devices, the assignment section assigns the smallest logical sector number of each optical disk to a respectively different physical sector number.

Furthermore, in the present embodiment, each optical disk may include a data area and a spare area. In this case, the assignment section of the optical disk array apparatus may allocate a respectively different size for the spare area (inner spare area) located at the leading end of the data area of each optical disk.

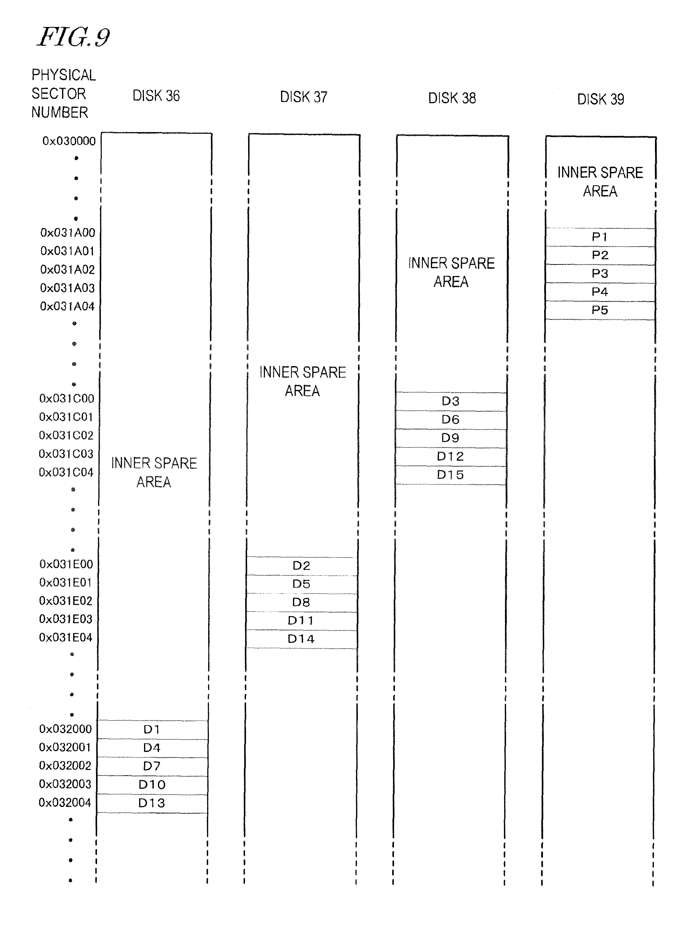

By ensuring a respectively different size of the inner spare area **20** of each optical disk composing the optical disk array, as shown in FIG. **9****,** data belonging to the same stripe is recorded at sectors of mutually different physical sector numbers of the respective optical disks. As a result, the probability of occurrence of read errors due to interferences of adjacent guide grooves and/or insufficient formation of guide grooves can be leveled out, and the maximum probability of read errors can be kept small.

Although it is illustrated that the size of the inner spare area **20** is designated by the controller **30** to the drives **31** to **34** in advance, the drives **31** to **34** may themselves determine respectively different predetermined sizes. In other words, although the present embodiment illustrates the assignment section as being the controller **30,** the drives **31** to **34** themselves may each include its own assignment section.

Note that formatting of the optical disks may be executed when a command to initialize the optical disk array comes from an external device.

The present embodiment illustrates an example where, in all of the optical disks **36** to **39,** the smallest logical sector number is assigned to respectively different physical sector numbers. It also illustrates an example where, in all of the optical disks **36** to **39,** respectively different sizes are allocated to their spare areas (inner spare areas) located at the leading end of each data area. However, the construction of the present embodiment is not limited thereto.

For example, only the smallest logical sector number of the optical disk that is mounted in one predetermined drive among the plurality of drives may be assigned to a different physical sector number from the physical sector number to which the smallest logical sector number of another optical disk mounted in any drive other than the predetermined drive is assigned.

Similarly, to only the spare area (inner spare area) located at the leading end of the data area of the optical disk that is mounted in one predetermined drive among the plurality of drives, a different size from the size of the spare area (inner spare area) located at the leading end of the data area of another optical disk mounted in any drive other than the predetermined drive may be allocated.

This is not limited to there being only one such drive and optical disk. Specifically, when the optical disk array apparatus includes N (which is an integer such that 2≦ N) drives, in those optical disks which are mounted in M (which is an integer such that 1≦M≦N) drives among the N drives, the smallest logical sector number of each may be assigned to a different physical sector number from a physical sector number to which the smallest logical sector number of another optical disk mounted in any other drive is assigned.

Similarly, to the spare area (inner spare area) located at the leading end of the data area of each of those optical disks mounted in M drives, a different size from the size of the spare area (inner spare area) located at the leading end of the data area of another optical disk mounted in any other drive may be allocated.

However, in the case where N is such that 3≦N and M is such that 1≦M≦N, among the optical disks mounted in the N drives, there may be a combination(s) of optical disks in which the smallest logical sector number is assigned to the same physical sector number as one another. Similarly, among the optical disks mounted in the N drives, there may be a combination(s) of optical disks the sizes of whose spare areas (inner spare areas) located at the leading end of each data area are designated to be the same size as one another.

However, in such cases, too, in the optical disk(s) mounted in at least one drive among the N drives, data in the same stripe can be recorded at a sector of a different physical sector number.

Therefore, increase in the aforementioned probability oscillation of reproduction errors is reduced in the present invention, as compared to any construction in which data in the same stripe is recorded to sectors of the same physical sector number in all of a plurality of optical disks. In other words, data reliability can be enhanced.

It is preferable that, as was mainly so described in the present embodiment, the smallest logical sector number is assigned to mutually different physical sector numbers among the optical disks mounted in all drives (i.e., M=N).

Similarly, preferably among the optical disks mounted in all drives (i.e., M=N), respectively different sizes are allocated to the spare areas (inner spare areas) located at the leading end of each data area.

As a result, in all of the optical disks mounted in the plurality of drives, data in the same stripe can be recorded to sectors of different physical sector numbers. Therefore, the increase in the aforementioned probability oscillation of reproduction errors can be reduced to the largest degree. In other words, data reliability can be enhanced.

### (Embodiment 2)

A case will be described where, in the construction of Embodiment 1 described above, the optical disk **36** and the optical disk **37** are of the same lot manufactured by company A, while the optical disk **38** and the optical disk **39** are of the same lot manufactured by company B.

When receiving from an external device a command to initialize the optical disk array, the controller **30** issues a command to acquire disk information to the drives **36** to **39,** and acquires manufacturer numbers and revision numbers of the optical disks **36** to **39.** Based on the acquired manufacturer numbers and revision numbers, the controller **30** designates sizes of inner spare areas **20** of the optical disks **36** to **39** for the drives **31** to **34.** The drives **31** to **34** format the optical disks **36** to **39** so that the sizes of their inner spare areas **20** are sizes as designated by the controller **30.**

It is assumed herein that the optical disk **36** and the optical disk 37 are of the same manufacturer number and the same revision number, and that the optical disk **38** and the optical disk **39** are of the same manufacturer number and the same revision number, which are different from those of the optical disk **36.** The controller **30** identifies the optical disk **36** and the optical disk **37,** which have matching manufacturer numbers and revision numbers, as optical disks of the same lot (i.e., optical disks which were produced with the same stamper), and designates respectively different sizes of inner spare areas **20** for the drive **31** and the drive **32.** Moreover, it identifies the optical disk **38** and the optical disk **39,** which have matching manufacturer numbers and revision numbers, as optical disks of the same lot (i.e., optical disks which were produced with the same stamper), and designates respectively different sizes of inner spare areas **20** for the drive **33** and the drive **34.**

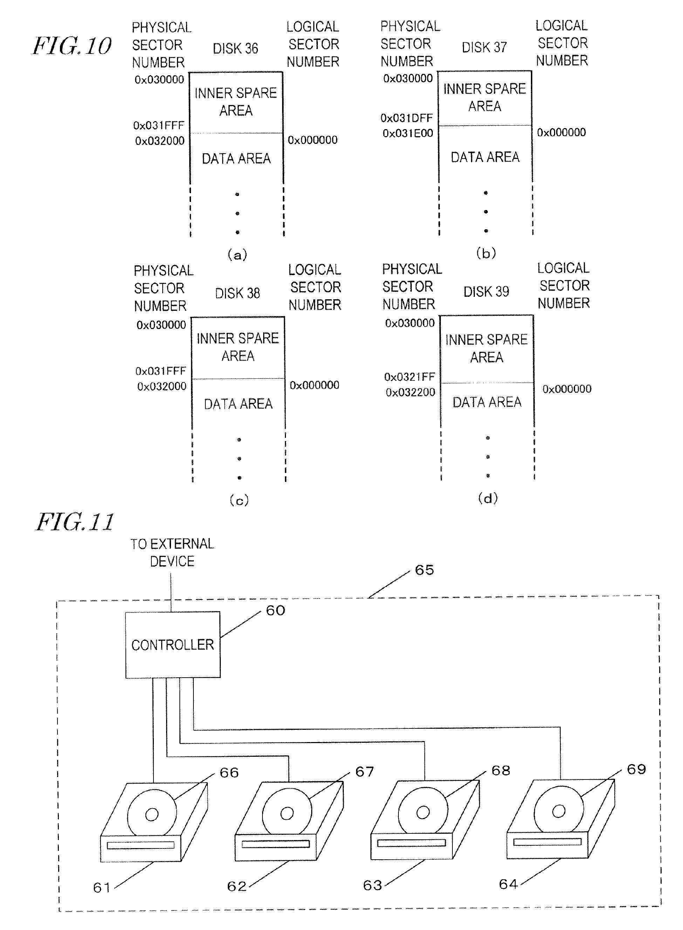

An example of this will be described with reference to FIG. **10.** FIG. **10** is a diagram of allocation of inner spare areas **20** according to Embodiment 2 of the present invention. In accordance with an instruction from the controller **30,** the drive **31** assigns sectors of physical sector numbers 0x030000 to 0x031FFF of the optical disk **36** as an inner spare area **20,** as shown in FIG. **10(a)****.** The drive **32** assigns sectors of physical sector numbers 0x030000 to 0x031DFF of the optical disk **37** as an inner spare area **20,** as shown in FIG. **10(b)****.** The drive **33** assigns sectors of physical sector numbers 0x030000 to 0x031FFF of the optical disk **38** as an inner spare area **20,** as shown in FIG. **10(c)****.** The drive **34** assigns sectors of physical sector numbers 0x030000 to 0x0321FF of the optical disk **39** as an inner spare area **20,** as shown in FIG. **10(d)****.**

Thus, respectively different sizes are allocated to the spare areas of the optical disks **36** and **37,** which are of the same lot (the same stamper). Moreover, respectively different sizes are allocated to the spare areas of the optical disks **38** and **39,** which are of the same lot (the same stamper).

Moreover, as shown in FIG. **10****,** the smallest logical sector number, i.e., the logical sector number 0x000000, is assigned to different physical sector numbers in the optical disks **36** and **37** of the same lot (the same stamper). Moreover, the smallest logical sector number, i.e., the logical sector number 0x000000, is assigned to different physical sector numbers in the optical disks **38** and **39** of the same lot (the same stamper).

Specifically, in the optical disk **36,** the smallest logical sector number, i.e., the logical sector number 0x000000, is assigned to the physical sector number 0x032000. In the optical disk **37,** the smallest logical sector number, i.e., the logical sector number 0x000000, is assigned to the physical sector number 0x031E00.

In the optical disk **38,** the smallest logical sector number, i.e., the logical sector number 0x000000, is assigned to the physical sector number 0x032000.In the optical disk **39,** the smallest logical sector number, i.e., the logical sector number 0x000000, is assigned to the physical sector number 0x032200.

Herein, the inner spare areas **20** of the optical disk **36** and the optical disk **38** have the same size. However, there is no data reliability problem even if data belonging to the same stripe is placed at the same physical sector number, because it is known from their manufacturer numbers or revision numbers that different stampers were used in the production of the optical disk **36** and the optical disk **38.**

Thus, the optical disk array apparatus of the present embodiment includes a plurality of recording/reproduction devices (drives) which record and reproduce data on optical disks. Moreover, the optical disk array apparatus of the present embodiment includes a determination section and an assignment section (controller **30).** In this state, for the respective optical disks mounted in the recording/reproduction devices, the determination section determines the stamper for each optical disk. Moreover, in any optical disks sharing the same stamper, the assignment section assigns the smallest logical sector number of each optical disk to different physical sector numbers.

Based on the manufacturer numbers and revision numbers of the optical disks **36** to **39,** the controller **30** determines whether the same stamper was shared or not, and ensures that any optical disk sharing the same stamper during production have different sizes of inner spare areas **20.** As a result, in any optical disks of the same lot (the same stamper), data belonging to the same stripe is recorded at sectors of different physical sector numbers of the respective optical disks. As a result, the probability of occurrence of read errors due to interferences of adjacent guide grooves and/or insufficient formation of guide grooves can be leveled out, and the maximum probability of read errors can be kept small. Moreover, the size difference between the inner spare areas **20** of the optical disks **36** to **39** can be kept minimum, whereby deterioration in the access rate at the time of replacement recording can be minimized.

Note that information other than manufacturer numbers and revision numbers may be used for identifying optical disks of the same lot (the same stamper). In the case of using reproduced information from optical disks for identifying optical disks of the same lot (the same stamper), information which is recorded by the meandering shape of guide grooves and/or prepit positions may be used. If the information which is recorded by the meandering shape of guide grooves and/or prepit positions differs even partly, such optical disks can be identified as optical disks which were produced with different stampers. For example, parameter information for recording or the like is also available for the identification of optical disks of the same lot (the same stamper). Otherwise, optical disks of the same lot (the same stamper) may be identified based on physical characteristics, such as reflectance of the optical disks.

Note that, in Embodiment 1 or 2 of the present invention, the size of the outer spare area **22** may be selected so that a total of the sizes of the inner spare area **20** and the outer spare area **22** is equal among the optical disks **36** to **39.**

In other words, the assignment section of the optical disk array apparatus of Embodiment 1 or 2 may carry out allocation so that a total of the size of the spare area (inner spare area) located at the leading end of the data area and the size of the spare area (outer spare area) located at the trailing end of the data area is equal among the plurality of optical disks.

In this case, since the data areas **21** of the optical disks **36** to **39** have the same size, maximum use of the data zones **11** can be made, without leaving wasted regions therein.

In the present embodiment, as one example, it is illustrated that the smallest logical sector number is assigned to respectively different physical sector numbers in the optical disks **36** and **37** of the same lot (the same stamper) (or the optical disks **38** and **39).** Also as one example, it is illustrated that respectively different sizes are allocated for the spare areas (inner spare areas) located at the leading end of each data area in the optical disks **36** and **37** of the same lot (the same stamper) (or the optical disks **38** and **39).** However, the construction of the present embodiment is not limited thereto.

For example, assume that the optical disks **36** to **38** excluding the optical disk **39** are optical disks of the same lot (the same stamper), among the optical disks **36** to **39.** In this case, the smallest logical sector number may be assigned to respectively different physical sector numbers in all of the optical disks **36** to **38.** Moreover, in all of the optical disks **36** to **38,** respectively different sizes may be allocated for the spare areas (inner spare areas) located at the leading end of each data area.

Furthermore, in the case where the optical disks **36** to **38** excluding the optical disk **39** are optical disks of the same lot (the same stamper), only the smallest logical sector number of one optical disk among the optical disks **36** to **38** may be assigned to a different physical sector number from the physical sector number to which the smallest logical sector number of any other optical disk in the same lot (the same stamper) is assigned.

Similarly, to only the spare area (inner spare area) located at the leading end of the data area of one optical disk among the optical disks **36** to **38,** a different size from the size of the spare area (inner spare area) located at the leading end of the data area of any other optical disk in the same lot (the same stamper) may be allocated.

This is not limited to there being only one such optical disk. Specifically, when optical disks of the same lot (the same stamper) are mounted in n (which is an integer such that 2≦n) drives among the plurality of drives included in the optical disk array apparatus, in those optical disks which are mounted in m (which is an integer such that 1≦m≦ n) drives among the n drives, the smallest logical sector number of each may be assigned to a different physical sector number from a physical sector number to which the smallest logical sector number of an optical disk mounted in any other drive among the m drives is assigned.

Similarly, to the spare area (inner spare area) located at the leading end of the data area of each of those optical disks mounted in m drives, a different size from the size of the spare area (inner spare area) located at the leading end of the data area of an optical disk mounted in any other drive may be allocated.

However, in the case where n is such that 3≦n and m is such that 1≦m<n, among the optical disks mounted in the n drives, there may be a combination(s) of optical disks in which the smallest logical sector number is assigned to the same physical sector number as one another. Similarly, among the optical disks mounted in the n drives, there may be a combination(s) of optical disks the sizes of whose spare areas (inner spare areas) located at the leading end of each data area are designated to be the same size as one another.

However, in such cases, too, in the optical disk(s) mounted in at least one drive among the n drives, data in the same stripe can be recorded at a sector of a different physical sector number.

Therefore, increase in the aforementioned probability oscillation of reproduction errors is reduced in the present invention, as compared to any construction in which data in the same stripe is recorded to sectors of the same physical sector number in all of a plurality of optical disks. In other words, data reliability can be enhanced.

It is preferable that, as was mainly so described in the present embodiment, the smallest logical sector number is assigned to mutually different physical sector numbers among all (i.e., m=n) of the optical disks of the same lot (the same stamper). Similarly, preferably among all (i.e., m=n) of the optical disks of the same lot (the same stamper), respectively different sizes are allocated to the spare areas (inner spare areas) located at the leading end of each data area.

As a result, in all of the optical disks of the same lot (the same stamper), data in the same stripe can be recorded to sectors of different physical sector numbers. Therefore, the increase in the aforementioned probability oscillation of reproduction errors can be reduced to the largest degree. In other words, data reliability can be enhanced.

### (Embodiment 3)

Embodiment 3 of the present invention will be described with reference to FIG. **11.** FIG. **11** is a block diagram showing the construction of an optical disk array apparatus **65** according to Embodiment 3 of the present invention. The optical disk array apparatus **65** includes a controller **60** and drives **61** to **64.** Optical disks **66** to **69** are mounted in the drives **61** to **64.** The aggregate of optical disks **66** to **69** will be referred to as an optical disk array.

The optical disk array apparatus **65** is connected to an external device (not shown) via the controller **60,** so that the whole functions as RAID4. For any recording data which is input from the external device, the controller **60** determines, on the basis of a logical address, a drive and a logical sector number to which it is to be recorded, and issues a recording command to the corresponding drive **61** to **63.** Furthermore, a recording command for parity data, which is generated from the recording data that is input from the external device, is issued to the drive **64.** In accordance with the recording commands from the controller **60,** the drives **61** to **64** record the recording data and the parity data to the mounted optical disks **66** to **69.**

Moreover, before a first recording is performed for the mounted optical disks **66** to **69,** the drives **61** to **64** format the optical disks to assign the logical sector number 0x000000 to physical sector numbers. Prior to formatting, the controller **60** designates respectively different physical sector numbers for the drives **61** to **64** as the physical sector numbers to which the logical sector number 0x000000 is assigned.

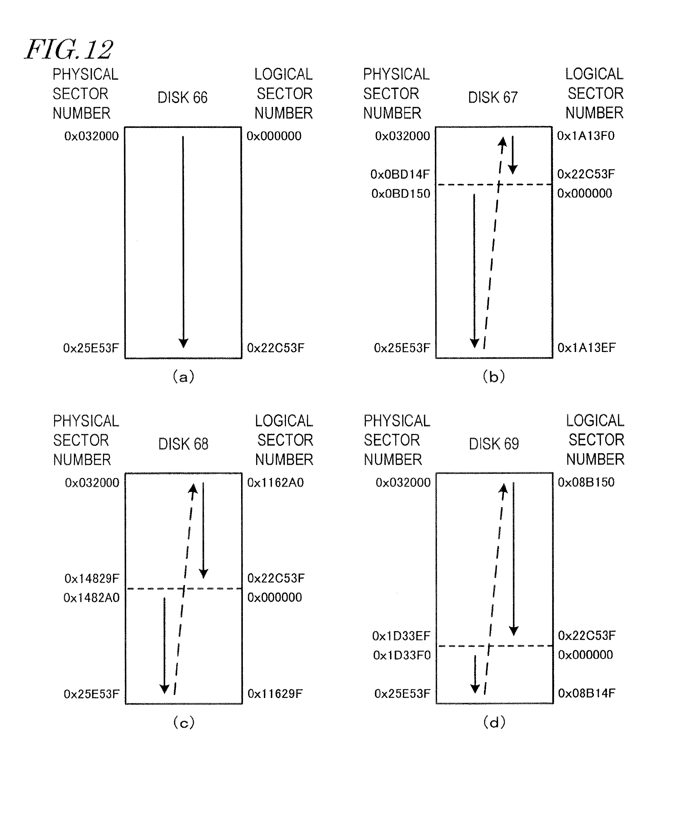

An example thereof will be described with reference to FIG. **12.** FIG. **12** is a diagram showing assignment of the logical sector number 0x000000 and physical sector numbers according to Embodiment 3 of the present invention. In accordance with an instruction from the controller **60,** the drive **61** assigns the logical sector number 0x000000 to a sector of the physical sector number 0x032000 of the optical disk **66,** as shown in FIG. **12(a)****.** As shown in FIG. **12(b)****,** the drive **62** assigns the logical sector number 0x000000 to a sector of the physical sector number 0x0BD150 of the optical disk 67. As shown in FIG. **12(c)****,** the drive **63** assigns the logical sector number 0x000000 to a sector of the physical sector number 0x1482A0 of the optical disk **68.** As shown in FIG. **12(d)****,** the drive **64** assigns the logical sector number 0x000000 to a sector of the physical sector number 0x1D33F0 of the optical disk **69.**

The stripe construction and the assignment of logical sector numbers may be similar to the assignment for the optical disks **36** to **39** according to Embodiment 1 of the present invention, and the descriptions thereof are omitted here.

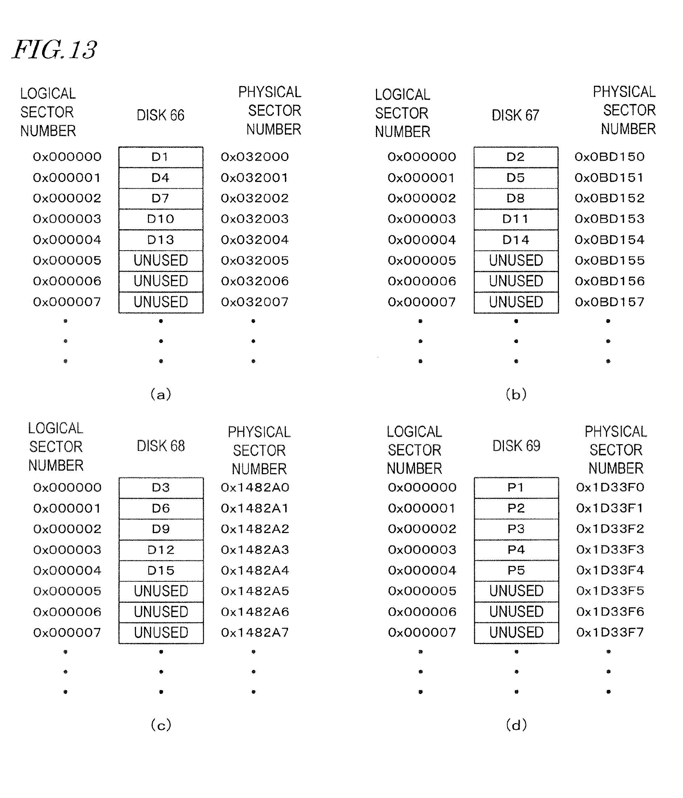

The relationship between the logical sector numbers which are assigned to recording data and parity data and the physical sector numbers at which such data are actually recorded will be described with reference to FIG. **13****.**

FIG. **13** is a diagram showing assignment of logical sector numbers and physical sector numbers according to Embodiment 3 of the present invention. Recording data **D1** is recorded at a sector of the physical sector number 0x032000 of the optical disk **66.** Recording data **D2** is recorded at a sector of the physical sector number 0x0BD150 of the optical disk **67.** Recording data **D3** is recorded at a sector of the physical sector number 0x1482A0 of the optical disk **68.** Recording data **D4** is recorded at a sector of the physical sector number 0x032001 of the optical disk **66.** Recording data **D5** is recorded at a sector of the physical sector number 0x0BD151 of the optical disk **67.** Recording data **D6** is recorded at a sector of the physical sector number 0x1482A1 of the optical disk **68.** Recording data **D7** is recorded at a sector of the physical sector number 0x032002 of the optical disk **66.** Recording data **D8** is recorded at a sector of the physical sector number 0x0BD152 of the optical disk **67.** Recording data **D9** is recorded at a sector of the physical sector number 0x1482A2 of the optical disk **68.** Recording data **D10** is recorded at a sector of the physical sector number 0x032003 of the optical disk **66.** Recording data **D11** is recorded at a sector of the physical sector number 0x0BD153 of the optical disk **67.** Recording data **D12** is recorded at a sector of the physical sector number 0x1482A3 of the optical disk **68.** Recording data **D13** is recorded at a sector of the physical sector number 0x032004 of the optical disk **66.** Recording data **D14** is recorded at a sector of the physical sector number 0x0BD154 of the optical disk **67.** Recording data **D15** is recorded at a sector of the physical sector number 0x1482A4 of the optical disk **68.** Parity data **P1** is recorded at a sector of the physical sector number 0x1D33F0 of the optical disk **69.** Parity data **P2** is recorded at a sector of the physical sector number 0x1D33F1 of the optical disk **69.** Parity data **P3** is recorded at a sector of the physical sector number 0x1D33F2 of the optical disk **69.** Parity data **P4** is recorded at a sector of the physical sector number 0x1D33F3 of the optical disk **69.** Parity data **P5** is recorded at a sector of the physical sector number 0x1D33F4 of the optical disk **69.**

Since the recording data which are recorded in this manner constitute RAID4, even if one piece of recording data in the same stripe becomes unable to read, it can be restored from the other recording data and the parity data in that stripe. For example, if **D3** becomes unable to read, **D3** can be determined and restored through calculation from the other recording data and the parity data **(D1**, **D2, P1)** in the stripe that contains **D3.**

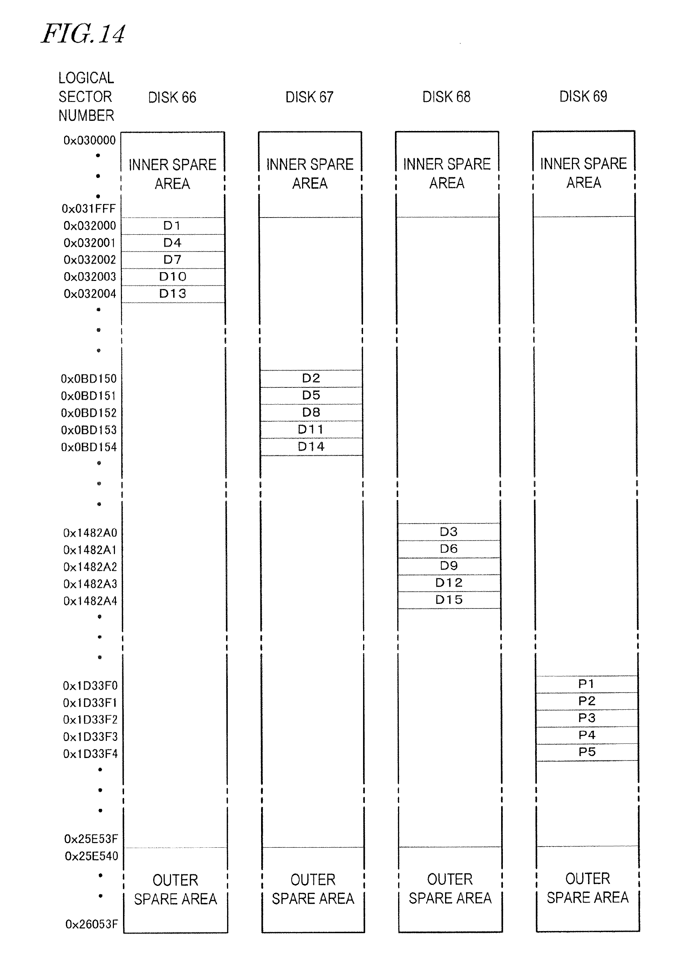

By ensuring that the logical sector number 0x000000 is assigned to respectively different physical sector numbers among the disks composing the optical disk array, as shown in FIG. **14****,** data belonging to the same stripe is recorded at sectors of different physical sector numbers of the respective optical disks. As a result, the probability of occurrence of read errors due to interferences of adjacent guide grooves and/or insufficient formation of guide grooves can be leveled out, and the maximum probability of read errors can be kept small.

Note that in any optical disk in which the logical sector number 0x000000 is assigned to anywhere other than the physical sector number at the leading end of the data area, the next logical sector number to a logical sector number which is assigned to the final physical sector number of the data area may be assigned to the physical sector number at the leading end of the data area.

For example, in the optical disk **67** shown in FIG. 12, the logical sector number 0x1A13F0, which is next to the logical sector number 0x1A13EF assigned to the final physical sector number 0x25E53F of the data area, is assigned to the physical sector number 0x032000 at the leading end of the data area. In the optical disk **68,** the logical sector number 0x1162A0, which is next to the logical sector number 0x11629F assigned to the final physical sector number 0x25E53F of the data area, is assigned to the physical sector number 0x032000 at the leading end of the data area. In the optical disk **69,** the logical sector number 0x08B150, which is next to the logical sector number 0x08B14F assigned to the final physical sector number 0x25E53F of the data area, is assigned to the physical sector number 0x032000 at the leading end of the data area.

As described above, in the present embodiment, each optical disk includes a data area. In this state, in any optical disk in which the smallest logical sector number is assigned to a physical sector number which is not at the leading end of the data area, the assignment section of the optical disk array apparatus ensures that the next logical sector number to a logical sector number which is assigned to the physical sector number of the trailing end of the data area is assigned to the physical sector number at the leading end of the data area.

As a result, every one of the logical sector numbers 0x000000 to 0x22C53F of the optical disks **66** to **69** is assigned to some physical sector number, thus utilizing the data area without waste.

Note that the aforementioned construction of the present Embodiment 3 may be combined with the constructions of Embodiments 1 and 2 described above.

Although the sizes of the inner spare area and the outer spare area are described as 0x2000 sectors, any other size may be adopted, and the inner spare area and the outer spare area may be different in size. Moreover, the sizes of the inner spare area and the outer spare area may differ among optical disks **66** to **69.** The size may be 0, so that no spare area is provided.

Although it is illustrated that the physical sector numbers to which the logical sector number 0x000000 is assigned are designated by the controller **60** to the drives **61** to **64** in advance, it may be the drives **61** to **64** themselves that determine respectively different predetermined physical sector numbers. In other words, although the present embodiment illustrates the assignment section as being the controller **60,** the drives **61** to **64** themselves may each include its own assignment section.

Note that formatting of the optical disks may be executed when a command to initialize the optical disk array comes from an external device.

Note that the optical disks used may be of a type having a plurality of recording layers. For example, in the case where optical disks having four recording layers are used, the leading logical address may be assigned to the leading ends of the data areas of different recording layers.

Note that influences of the stamper on defects can be further reduced by allowing the physical sector numbers to which the logical sector number 0x000000 is assigned to have as much difference as possible between optical disks. For example, every physical sector number to which the logical sector number 0x000000 is assigned may be varied by a size obtained by equally dividing the data area by the number of drives composing the optical disk array apparatus. Moreover, every physical sector number to which the logical sector number 0x000000 is assigned may be varied by a length obtained by equally dividing the length from a radial position at the leading end of a data area to a radial position at the trailing end of the data area.

Note that, in the case where a constant-angular-velocity recording is performed on an optical disk which is constant-linear-velocity formatted, it is better if there is not much disk-to-disk difference between physical sector numbers to which the logical sector number 0x000000 is assigned. Recording under a constant angular velocity results in the recording transfer rate becoming smaller toward the inner periphery. Therefore, if the physical sector numbers to which the logical sector number 0x000000 is assigned are equally differentiated among drives, there will always be a recording drive at the inner periphery side, whose recording speed bottlenecks the overall recording speed. As for interferences of adjacent guide grooves, differentiations on the order of several tracks will level out the probability of occurrence of read errors.

Similarly to Embodiment 2 of the present invention, it may only be among optical disks of the same lot that the logical sector number 0x000000 are assigned to respectively different physical sector numbers. Especially in the case where a constant-angular-velocity recording is performed on an optical disk which is constant-linear-velocity formatted, the overall recording speed can be minimized. Moreover, the recording data buffer can be reduced for the amount of time required for moving from the trailing end of a data area to the beginning of a data area in continuous recording.

Although Embodiments 1 to 3 of the present invention illustrate an exemplary RAID4 constructed with four drives, the number of drives may be increased or decreased, and the present invention is also applicable to other RAID constructions such as RAID1, RAIDS, and RAID6.

Note that rewritable type optical disks or write-once type optical disks may be adopted as the optical disks to be used in Embodiments 1 to 3 of the present invention.

In the case where replacement recording is to be performed in Embodiments 1 to 3 of the present invention, the destination of replacement recording may be selected so that data in the same stripe will not receive the same physical sector number.

Instead of sectors, blocks defining units of error correcting codes may be used. In this case, the logical sector numbers and the physical sector numbers should read respectively as logical block numbers and physical block numbers.

In Embodiments 1 to 3 of the present invention, management information may be recorded in a place other than the lead-in zone **10,** or recorded on a separate storage device.

Note that the processes by the optical disk array apparatuses of Embodiments 1 to 3 of the present invention may be implemented in software. In this case, a CPU may serve as the controller, whereby a so-called software RAID is constituted. By operating in accordance with a program which is stored in an internal or external storage medium, the CPU is able to execute the aforementioned processes.

### (Embodiment 4)

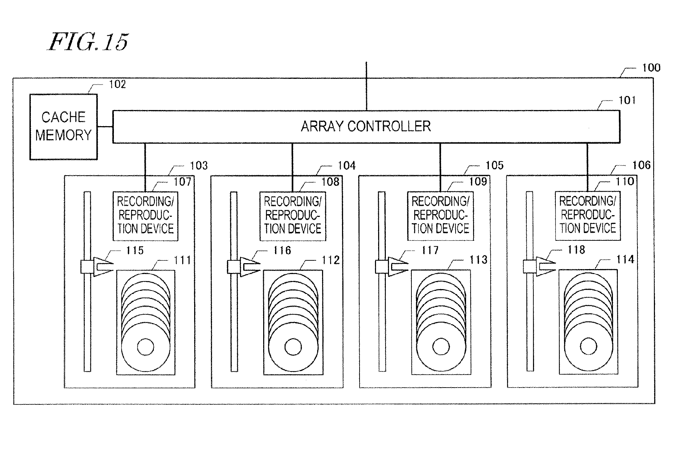

FIG. **15** is a block diagram showing an information storage medium library array apparatus **100** according to Embodiment 4 of the present invention.

In FIG. **15****,** the array controller **101** is a controller which controls information storage medium library devices **103** to **106** so as to realize an array structure. The array controller **101** uses a cache memory **102,** in order to temporarily retain data which is read from the information storage medium library devices **103** to **106** and temporarily retain data to be recorded to the information storage medium library devices **103** to **106.** Each of the information storage medium library devices **103** to **106** is composed of a recording/reproduction device **107** to **110,** a cabinet **111** to **114,** and a carriage **115** to **118.** The recording/reproduction device **107** to **110** is an apparatus which performs data reproduction/recording on a mounted information storage medium, whereas the cabinet **111** to **114** accommodates a plurality of information storage media. The carriage **115** to **118** carries an information storage medium between the recording/reproduction device **107** to **110** and the cabinet **111** to **114.** In this example, the information storage media are optical disks.

In Embodiment 4, RAIDS is constructed with four information storage media which are mounted in the recording/reproduction devices **107** to **110,** each having a plurality of recording layers.

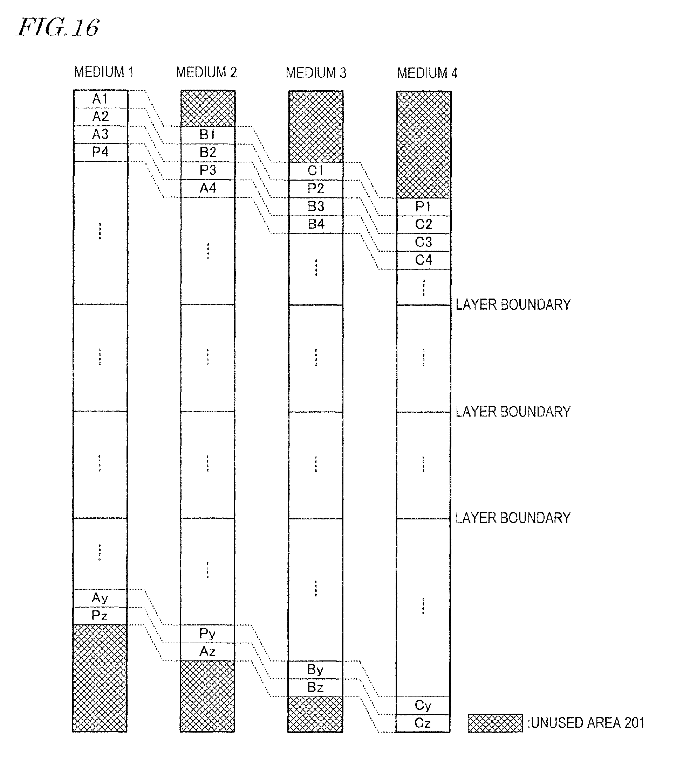

FIG. **16** is a diagram showing positioning of data to be recorded in user data regions of the information storage media according to Embodiment 4. Each information storage medium in FIG. **16** is composed of four recording layers.

In FIG. **16****,** Media 1 to 4 are optical disks mounted in the recording/reproduction devices **107** to **110** respectively, such that respectively different sizes of unused areas **201** are provided at the leading ends of Media 2 to 4. Assuming that the unused area **201** at the leading end of Medium 2 has a size **s,** the unused area **201** at the leading end of Medium 3 is **2s,** and the unused area **201** at the leading end of Medium 4 is **3s.** Also, respectively different sizes of unused areas **201** are provided at the trailing ends of Media 1 to 3. It is assumed that the unused area **201** at the trailing end of Medium 1 is **3s,** the unused area **201** at the trailing end of Medium 2 is **2s,** and the unused area **201** at the trailing end of Medium 3 is **s.** As the size **s,** an integer (which is 1 or more) multiple of the stripe size is selected while considering the amount of time required for switching between recording layers for reproduction. Now, the stripe size is the size of a region composing a stripe corresponding to a single information storage medium. In FIG. **16****,** the size **s** is chosen to be twice the stripe size for convenience of explanation.

In FIG. **16****, A1** of Medium 1, **B1** of Medium 2, **C1** of Medium 3, and **P1** of Medium 4 together compose a stripe. Similarly, **A2** of Medium 1, **B2** of Medium 2, **P2** of Medium 3, and **C2** of Medium 4 together compose a stripe. Subsequent regions similarly compose stripes, such that the last stripe is composed by **Pz** of Medium 1, **Az** of Medium 2, **Bz** of Medium 3, and **Cz** of Medium 4. Note that any block beginning with **P** is a parity block.

When there is any point on an information storage medium from which data cannot be reproduced, data on other information storage media composing the stripe are used for restoration. For example, if **B2** of Medium 2 cannot be reproduced in FIG. **16****,** then the data in **A2** of Medium 1, **P2** of Medium 3, and **C2** of Medium 4 are used to calculate an exclusive OR of the data at the same byte position in **A2, P2,** and **C2,** thus restoring the data in **B2** of Medium 2.

Thus, the information storage medium library array apparatus **100** has redundancy for enabling data restoration when the data of at least one information storage medium composing a stripe cannot be reproduced. By using such stripe redundancy, recovery from reproduction errors is possible.

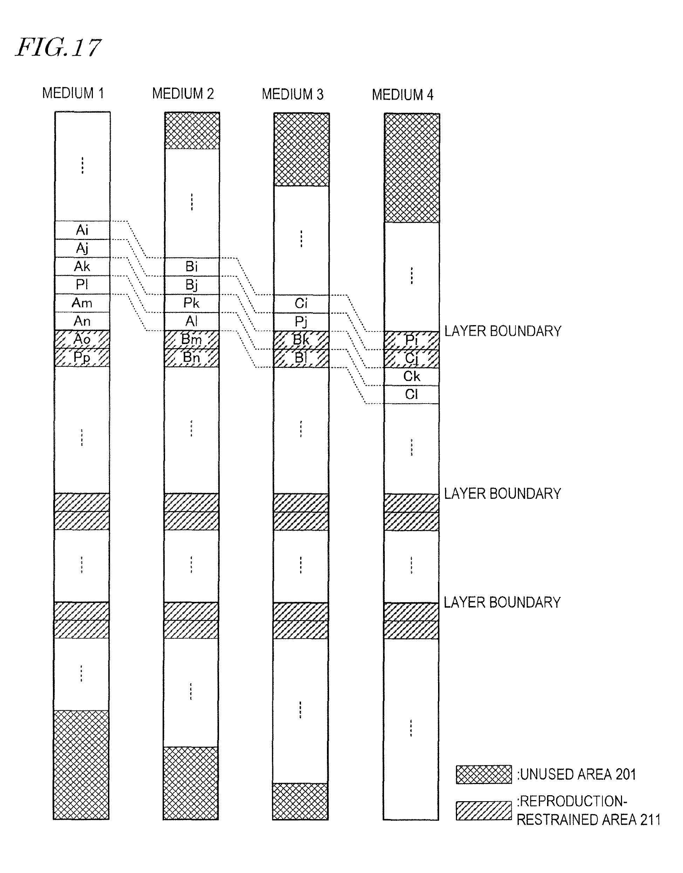

FIG. **17** shows a state of stripes near switching between recording layers of the information storage media of FIG. **16****.**

In FIG. **17****, Ai** of Medium 1, **Bi** of Medium 2, **Ci** of Medium 3, and **Pi** of Medium 4 together compose a stripe. Similarly, **Aj** of Medium 1, **Bj** of Medium 2, **Pj** of Medium 3, and **Cj** of Medium 4 together compose a stripe. **Ak** of Medium 1, **Pk** of Medium 2, **Bk** of Medium 3, and **Ck** of Medium 4 together compose a stripe. **Pl** of Medium 1, **Al** of Medium 2, **Bl** of Medium 3, and **Cl** of Medium 4 together compose a stripe.

An operation when the information storage medium library array apparatus **100** reproduces data near a switching between recording layers of the information storage medium shown in FIG. **17** will be described.

The array controller **101** restrains the information storage medium library device **106** from reproducing data in **Pi** and **Cj,** which are located immediately after switching of recording layers in Medium **4** of FIG. **17****.** A position located immediately after switching of recording layers is a position in the data area that will be the first to be accessed after the switching. In other words, the array controller **101** controls the information storage medium library device **106** so that the information storage medium library device **106** will not reproduce data from **Pi** and **Cj.** In the meanwhile, the array controller **101** restores data in **Pi** of Medium 4 from the data which are reproduced from **Ai** of Medium 1, **Bi** of Medium 2, and **Ci** of Medium 3 by the remaining information storage medium library devices **103** to **105,** and similarly, the array controller **101** restores **Cj** of Medium 4 from the data which are reproduced from **Aj** of Medium 1, **Bj** of Medium 2, and **Pj** of Medium 3 by the information storage medium library devices **103** to **105.** Herein, during the data restoration while restraining data reproduction from **Pi** and **Cj** of Medium 4, the information storage medium library device **106** performs switching to the recording layer to be reproduced and also prepares itself to reproduce **Ck,** which is the subsequent region of **Cj.** Similarly, the array controller **101** restrains the information storage medium library devices **105, 104,** and 103 from reproducing data in, respectively: **Bk** and **Bl**, which are located immediately after switching of recording layers in Medium **3** of FIG. **17****; Bm** and **Bn,** which are located immediately after switching of recording layers in Medium **2;** and **Ao** and **Pp,** which are located immediately after switching of recording layers in Medium 1. From the data which are reproduced from the other information storage media composing the same stripe by the remaining three of the information storage medium library devices **103** to **106,** the array controller **101** restores the data whose reproduction has been restrained.

In this manner, similarly for any other switching between recording layers, the information storage medium library array apparatus **100** restrains data reproduction immediately after switching of recording layers in the information storage medium, restores the data whose reproduction has been restrained from the data which are reproduced from other information storage media, and, during the data restoration while restraining data reproduction, performs switching of recording layers and prepares itself to reproduce a subsequent portion to the region whose reproduction has been restrained, whereby continuous data reproduction is enabled even upon switching between recording layers, without suspending data reproduction.

Thus, the information storage medium library array apparatus of the present embodiment includes a plurality of recording/reproduction devices. In this state, an information storage medium having a plurality of recording layers is mounted in each recording/reproduction device. A disk array is constituted by the information storage media mounted in the respective recording/reproduction devices. A plurality of stripes are formed in the disk array. It has redundancy for enabling data restoration when the data of at least one information storage medium composing a stripe cannot be reproduced. In this state, data composing one stripe is placed at physically different positions of the information storage media. As a result of this, the information storage medium library array apparatus ensures that the timing of switching recording layers of the information storage medium is different among the recording/reproduction devices. Then, each recording/reproduction device restrains data reproduction in a predetermined region range immediately after switching of recording layers in the information storage medium. The information storage medium library array apparatus restores the data in the predetermined region range from the data reproduced by the remaining recording/reproduction devices, excluding the recording/reproduction device which has been restrained from reproducing data.

With this construction, continuous data reproduction is enabled even upon switching between recording layers, without suspending data reproduction.

Moreover, while restoring the data in the predetermined region range, the information storage medium library array apparatus of the present embodiment may perform switching to the recording layer to be reproduced in the information storage medium and prepare itself to reproduce data in a subsequent region of the region in which data reproduction has been restrained, in the recording/reproduction device in which data reproduction has been restrained.

In the case where the region in which data reproduction has been restrained is a parity block, the data does not need to be restored from data which are reproduced from other information storage media. For example, **Pi** of Medium 4 and **Pp** of Medium 1 in FIG. **17** do not need to be restored.

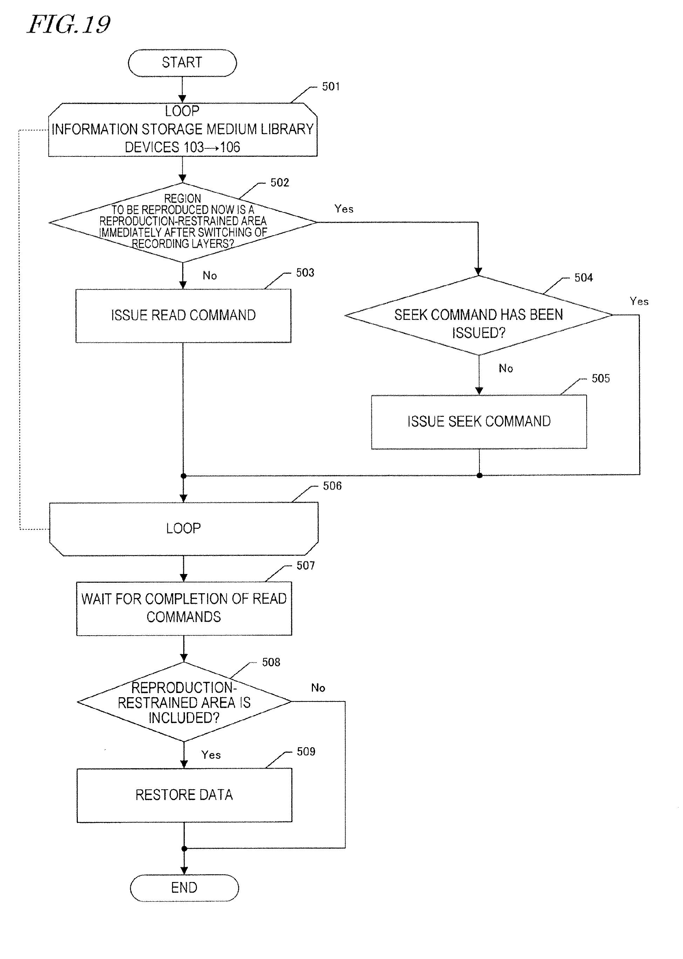

FIG. **19** is a flowchart showing a reproduction operation of the information storage medium library array apparatus **100** of Embodiment 4.

The array controller **101** repeats the steps between step **501** and step **506** for each of the information storage medium library devices **103** to **106.**

At step **502,** the array controller **101** determines whether the region which is going to be reproduced now is a reproduction-restrained area **211** immediately after switching of recording layers. If it is not a reproduction-restrained area **211,** control proceeds to step **503;** if it is a reproduction-restrained area **211,** control proceeds to step **504.** The region determination can be made by, for example, relying on the logical sector number of a reproduction command which is requested at the array controller **101** to determine a physical sector number corresponding to that logical sector number. Alternatively, in the case of read-ahead caching a subsequent region of a reproduction command requested at the array controller **101,** the region determination can be made by relying on a logical sector number which is subsequent to the logical sector number of the reproduction command to determine a physical sector number corresponding to the logical sector number.

At step **503,** the array controller **101** issues a READ command to the targeted information storage medium library device (one of **103** to **106),** and proceeds to a detection of termination of repetition of steps **501** to **506.**

At step **504,** the array controller **101** determines whether a SEEK command to a subsequent portion to the reproduction-restrained area **211** has already been issued for the targeted information storage medium library device (one of **103** to **106).** If it has not been issued, control proceeds to step **505;** if it has been issued, control proceeds to a detection of termination of repetition of steps **501** to **506.**

At step **505,** the array controller **101** issues a command to the targeted information storage medium library device (one of **103** to **106)** to SEEK a subsequent portion to the reproduction-restrained area **211.** With this SEEK command, a recording/reproduction device (one of **107** to **110)** included in the information storage medium library device (one of **103** to **106)** performs switching to the recording layer to be reproduced and moves a recording/reproduction head to near a subsequent portion to the region in which reproduction has been restrained. As a result of this, data reproduction is not performed in the reproduction-restrained area **211.** Once the SEEK command has been issue, control proceeds to a detection of termination of repetition of steps **501** to **506.**

When the processes for each of the information storage medium library devices **103** to **106** are completed, control proceeds to step **507.**

At step **507,** the array controller **101** waits for the completion of the READ commands having been issued at step **503.** When all READ commands issued at step **503** are completed, control proceeds to step **508.**

At step **508,** the array controller **101** determines whether any region has had its reproduction restrained with respect to any of the information storage medium library devices **103** to **106.** If any reproduction-restrained area **211** is included, control proceeds to step **509;** if no reproduction-restrained area **211** is included, the process is ended. As has been stated earlier, even when a reproduction-restrained area **211** exists, there is no need to proceed to step **509** if it is a parity block.

At step **509,** by using the reproduced data from the other information storage medium library devices (the other three of **103** to **106**), the array controller **101** restores the data in the region in which reproduction has been restrained, and the process is ended.

Through the above steps, the information storage medium library array apparatus **100** is able to restrain reproduction in a region immediately after switching of recording layers, and restore the data in the region in which reproduction has been restrained by using reproduced data from the other information storage medium library devices.

Thus, in the information storage medium library array apparatus according to the reproduction control method of the present embodiment, a disk array is constituted by a plurality of information storage media having a plurality of recording layers. A plurality of stripes are formed in the disk array. It has redundancy for enabling data restoration when the data of at least one information storage medium composing a stripe cannot be reproduced. Moreover, data composing one stripe is recorded at physically different positions of information storage media. In this state, the reproduction control method of the present embodiment involves a step of restraining data reproduction in a predetermined region range immediately after switching of recording layers in an information storage medium, and a step of restoring the data in the predetermined region range from the data which are reproduced from the remaining information storage media excluding the information storage medium whose data reproduction has been restrained.

With this construction, continuous data reproduction is enabled even upon switching between recording layers, without suspending data reproduction.

Embodiment 4 illustrates a case where unused areas **201** are provided at the leading ends and trailing ends of information storage media so that the data positioning on each information storage medium is differentiated by a multiple size of the stripe size, while considering the amount of time required for switching between recording layers for reproduction. However, it is preferable to adopt a multiple size of a stripe size which is required for the data reproduction corresponding to a total amount of time for switching to the recording layer to be reproduced and preparing to reproduce a subsequent portion to a region in which data reproduction has been restrained. The amount of time required for the data reproduction of this size may be determined from a disk data transfer rate, which in turn is determined from disk revolutions, or determined from a stream data transfer rate in the case of treating a stream of motion video, audio, or the like.

In Embodiment 4, stripe-construction based recording may also be performed in the unused areas **201** provided at the leading ends and trailing ends of the information storage media, thereby making all regions available for usage.

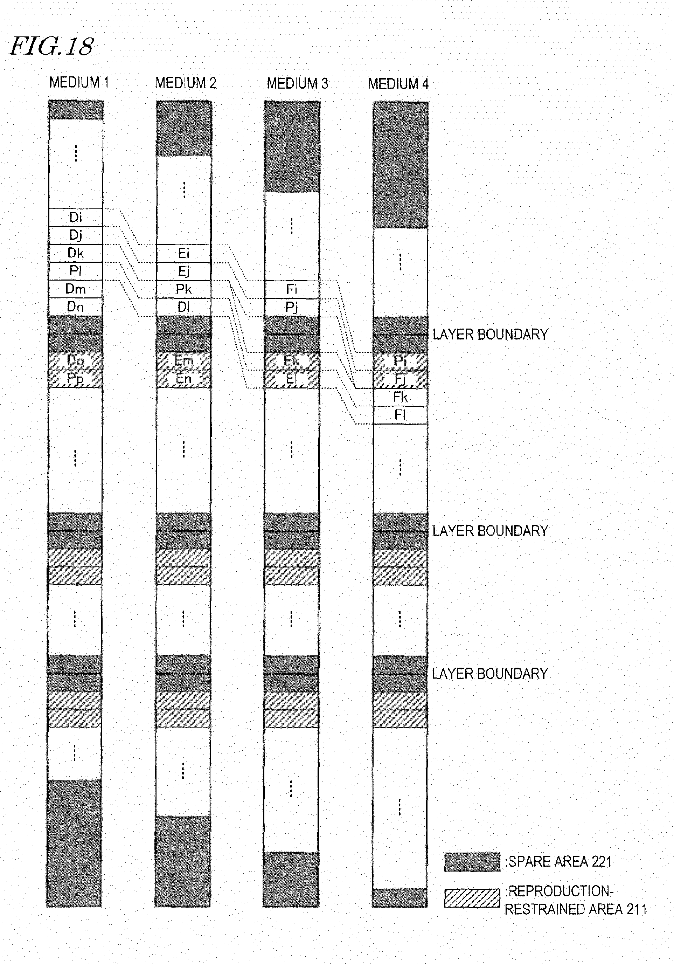

Furthermore, with information storage media each having spare areas **221** at the leading end and the trailing end of the information storage medium, such that the ratio of the spare areas **221** is changeable, a similar implementation is possible by, as shown in FIG. **18****,** varying the ratio of the spare areas **221** located at the leading end and the trailing end in each information storage medium, without providing unused areas **201** in the user data region.

Thus, in the information storage medium library array apparatus of the present embodiment, the information storage media may include spare areas **221** at the leading end and the trailing end. In this state, the information storage medium library array apparatus of the present embodiment may place data composing one stripe at physically different positions of the information storage media by using a different ratio between the spare areas **221** at the leading end and the trailing end in each of the information storage media composing the disk array.

### (Embodiment 5)

In Embodiment 5, an information storage medium set combining a plurality of information storage media is accommodated in each of cabinets **111** to **114,** so that one information storage medium in the information storage medium set is carried to a recording/reproduction device **107** to **110** by a carriage **115** to **118.** RAIDS is constructed with four information storage medium sets which are mountable to the recording/reproduction devices **107** to **110.**

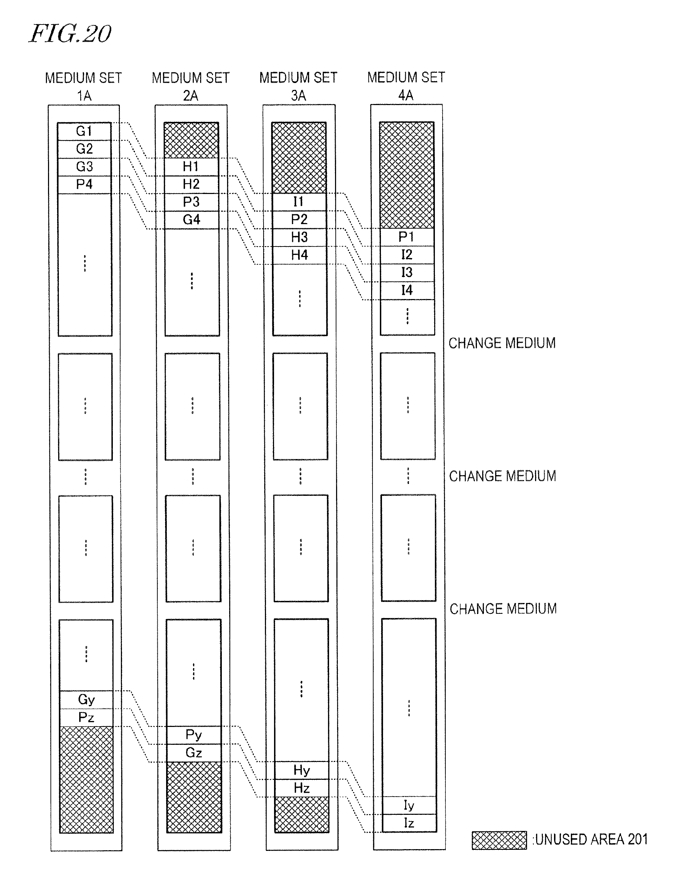

FIG. **20** is a diagram showing data positioning of user data regions to be recorded in the information storage medium sets of Embodiment 5.

In FIG. **20****,** a medium set **1A** is a set of plural information storage media mountable to the recording/reproduction device **107.** A medium set **2A** is a set of plural information storage media mountable to the recording/reproduction device **108.** A medium set **3A** is a set of plural information storage media mountable to the recording/reproduction device **109.** A medium set **4A** is a set of plural information storage media mountable to the recording/reproduction device **110.**

At the leading end of the first information storage medium in each of the medium sets **2A** to **4A,** an unused area **201** of a respectively different size is provided. Assuming that the unused area **201** at the leading end of the first information storage medium in the medium set **2A** has a size t, the unused area **201** at the leading end of the first information storage medium in the medium set **3A** has a size 2t, and the unused area **201** at the leading end of the first information storage medium in the medium set **4A** has a size 3t. Also at the trailing end of the last information storage medium in each of the medium sets **1A** to **3A,** an unused area **201** of a respectively different size is provided. It is assumed that the unused area **201** at the trailing end of the last information storage medium in the medium set **1A** has a size 3t, the unused area **201** at the trailing end of the last information storage medium in the medium set **2A** has a size 2t, and the unused area **201** at the trailing end of the last information storage medium in the medium set **3A** has a size t. As the size t, an integer (which is 1 or more) multiple of the stripe size is selected while considering the amount of time required for changing the information storage medium to be reproduced. In FIG. **20****,** the size t is chosen to be twice the stripe size for convenience of explanation.

In FIG. **20****, G1** of the medium set **1A, H1** of the medium set **2A, I1** of the medium set **3A,** and **P1** of the medium set **4A** together compose a stripe. Similarly, **G2** of the medium set **1A, H2** of the medium set **2A, P2** of the medium set **3A,** and **I2** of the medium set **4A** together compose a stripe. Subsequent regions similarly compose stripes, such that the last stripe is composed by the last used region of the last information storage medium in each information storage medium set, i.e., **Pz** of the medium set **1A, Gz** of the medium set **2A, Hz** of the medium set **3A,** and **Iz** of the medium set **4A.** Note that any block beginning with **P** is a parity block.

When there is any point on an information storage medium in an information storage medium set from which data cannot be reproduced, data on the information storage media in other information storage medium sets composing the stripe are used for restoration. For example, if **H2** of the medium set **2A** cannot be reproduced in FIG. **20****,** then the data in **G2** of the medium set **1A, P2** of the medium set **3A,** and **I2** of the medium set **4A** are used to calculate an exclusive OR of the data at the same byte position in **G2, P2,** and **I2,** thus restoring the data in **H2** of the medium set **2A.**

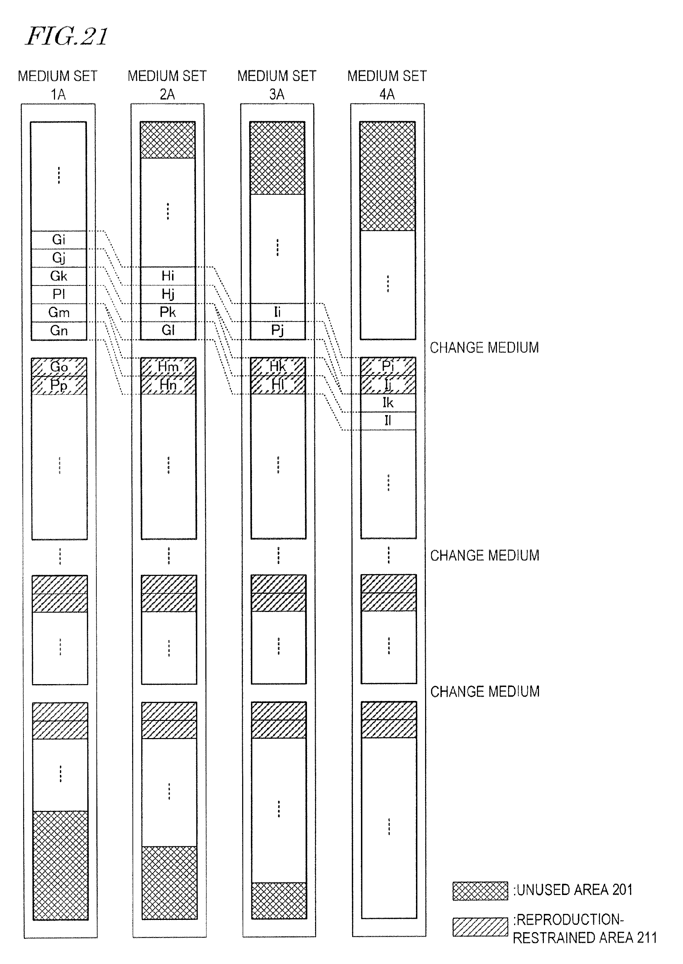

FIG. **21** shows a state of stripes near changes of the information storage media in the information storage medium sets of FIG. **20****.**

In FIG. **21****, Gi** of the medium set **1A, Hi** of the medium set **2A, Ii** of the medium set **3A,** and **Pi** of the medium set **4A** together compose a stripe. Similarly, **Gj** of the medium set **1A, Hj** of the medium set **2A, Pj** of the medium set **3A,** and **Ij** of the medium set **4A** together compose a stripe; **Gk** of the medium set **1A, Pk** of the medium set **2A, Hk** of the medium set **3A,** and **Ik** of the medium set **4A** together compose a stripe; and **Pl** of the medium set **1A, Gl** of the medium set **2A, Hl** of the medium set **3A,** and **Il** of the medium set **4A** together compose a stripe.

An operation when the information storage medium library array apparatus **100** reproduces data near a change of the information storage medium in an information storage medium set shown in FIG. **21** will be described.

The array controller **101** restrains the information storage medium library device **106** from reproducing data in **Pi** and **Ij,** which are located immediately after a change of the information storage medium in the medium set **4A** shown in FIG. **21****.** A position located immediately after a change of the information storage medium is a position in the data area that will be the first to be accessed after the change. In the meanwhile, the array controller **101** restores data in **Pi** of the medium set **4A** from the data which are reproduced from **Gi** of the medium set **1A, Hi** of the medium set **2A,** and **Ii** of the medium set **3A** by the remaining information storage medium library devices **103** to **105,** and the array controller **101** restores **Ij** of the medium set **4A** from the data which are reproduced from **Gj** of the medium set **1A, Hj** of the medium set **2A,** and **Pj** of the medium set **3A** by the information storage medium library devices **103** to **105.** Herein, during the data restoration while restraining data reproduction in **Pi** and **Ij** of the medium set **4A,** the information storage medium library device **106** changes the information storage medium to reproduce from in the medium set **4A,** and prepares itself to reproduce **Ik.** Similarly, the array controller **101** restrains the information storage medium library devices **105, 104,** and **103** from reproducing data in, respectively: **Hk** and **Hl,** which are located immediately after a change of the information storage medium in the medium set **3A** in FIG. **21****; Hm** and **Hn,** which are located immediately after a change of the information storage medium in the medium set **2A;** and **Go** and **Pp,** which are located immediately after a change of the information storage medium in the medium set **1A.** From the data which are reproduced by the remaining three of the information storage medium library devices **103** to **106** from the information storage media in the other information storage medium sets composing the same stripe, the array controller **101** restores the data whose reproduction has been restrained.

In this manner, similarly for any other change of an information storage medium, the information storage medium library array apparatus **100** restrains data reproduction immediately after a change of the information storage medium, and restores the data whose reproduction has been restrained from the data which are reproduced from the information storage media in the other information storage medium sets, and, during the data restoration while restraining data reproduction, performs changing of information storage media and prepares itself to reproduce a subsequent portion to the region whose reproduction has been restrained, whereby continuous data reproduction is enabled even when changing information storage media, without suspending data reproduction.

Thus, the information storage medium library array apparatus of the present embodiment includes a plurality of information storage medium library devices each having a recording/reproduction device, a cabinet, and a carriage. In this state, in the cabinet of each information storage medium library device, an information storage medium set combining a plurality of information storage media is accommodated. Then, in each information storage medium library device, an information storage medium in the information storage medium set is carried between the cabinet and the recording/reproduction device by the carriage, and the recording/reproduction device performs data reproduction. A disk array is constituted by the information storage medium sets accommodated in the cabinets of the respective information storage medium library devices. A plurality of stripes are formed in the disk array. It has redundancy for enabling data restoration when the data of an information storage medium in at least one information storage medium set composing a stripe cannot be reproduced. In this state, data composing one stripe is placed at physically different positions of the information storage media in the information storage medium sets. As a result of this, the information storage medium library array apparatus ensures that the timing of changing the information storage medium in the information storage medium set is different among the information storage medium library devices. Then, each information storage medium library device restrains data reproduction in a predetermined region range immediately after a change of the information storage medium in the information storage medium set. Then, the information storage medium library array apparatus restores the data in the predetermined region range from the data reproduced by the remaining information storage medium library devices, excluding the information storage medium library device which has been restrained from reproducing data.

With this construction, continuous data reproduction is enabled even when changing information storage media, without suspending data reproduction.

Moreover, while restoring the data in the predetermined region range, the information storage medium library array apparatus of the present embodiment may change the information storage medium to be reproduced in the information storage medium set in the information storage medium library device that has been restrained from reproducing data.

In the case where the region in which data reproduction has been restrained is a parity block, data whose reproduction has been restrained does not need to be restored from data which are reproduced from the information storage media in other information storage medium sets. For example, **Pi** of the medium set **4A** and the **Pp** of the medium set **1A** in FIG. **21** do not need to be restored.

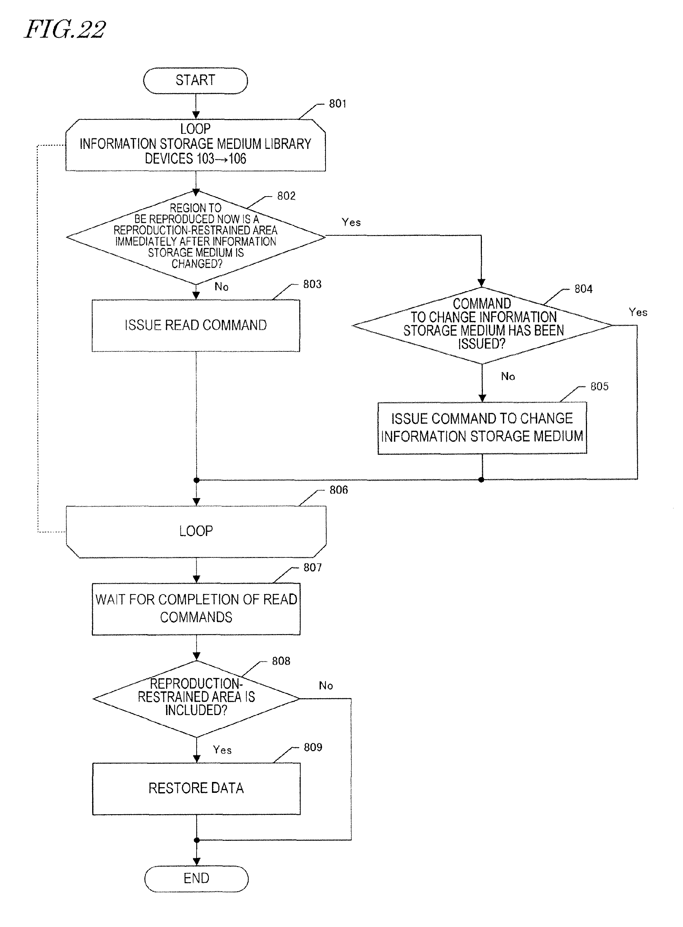

FIG. **22** is a flowchart showing a reproduction operation of the information storage medium library array apparatus **100** according to Embodiment 5.

The array controller **101** repeats the steps between step **801** and step **806** for each of the information storage medium library devices **103** to **106.**

At step **802,** the array controller **101** determines whether the region which is going to be reproduced now is a reproduction-restrained area **211** immediately after a change of the information storage medium. If it is not a reproduction-restrained area **211** control proceeds to step **803;** if it is a reproduction-restrained area **211,** control proceeds to step **804.** The region determination can be made by, for example, relying on the logical sector number of a reproduction command which is requested at the array controller **101** to determine an information storage medium and a physical sector number corresponding to that logical sector number. Alternatively, in the case of read-ahead caching a subsequent region of a reproduction command requested at the array controller **101,** the region determination can be made by relying on a logical sector number which is subsequent to the logical sector number of the reproduction command to determine an information storage medium and a physical sector number corresponding to that logical sector number.

At step **803,** the array controller **101** issues a READ command to the targeted information storage medium library device (one of **103** to **106),** and proceeds to a detection of termination of repetition of steps **801** to **806.**

At step **804,** the array controller **101** determines whether a command to change the information storage medium has already been issued for the targeted information storage medium library device (one of **103** to **106).** If it has not been issued, control proceeds to step **805;** if it has been issued, control proceeds to a detection of termination of repetition of steps **801** to **806.**

At step **805,** the array controller **101** issues a command to the targeted information storage medium library device (one of **103** to **106)** to change the information storage medium, and proceeds to a detection of termination of repetition of steps **801** to **806.** Note that, after the change of the information storage medium, data reproduction in the reproduction-restrained area **211** is not performed.

When the processes for each of the information storage medium library devices **103** to **106** are completed, control proceeds to step **807.**

At step **807,** the array controller **101** waits for the completion of the READ commands having been issued at step **803.** When all READ commands issued at step **803** are completed, control proceeds to step **808.**

At step **808,** the array controller **101** determines whether any region has had its reproduction restrained with respect to any of the information storage medium library devices **103** to **106.** If any reproduction-restrained area **211** is included, control proceeds to step **809;** if no reproduction-restrained area **211** is included, the process is ended. As has been stated earlier, even when a reproduction-restrained area **211** exists, there is no need to proceed to step **809** if it is a parity block.

At step **809,** by using the reproduced data from the other information storage medium library devices (the other three of **103** to **106),** the array controller **101** restores the data in the region in which reproduction has been restrained, and the process is ended.

Through the above steps, the information storage medium library array apparatus **100** is able to restrain reproduction in a region immediately after a change of the information storage medium, and restore the data in the region in which reproduction has been restrained by using reproduced data from the other information storage medium library devices.

Thus, in the information storage medium library array apparatus according to the reproduction control method of the present embodiment, a disk array is constituted by a plurality of information storage medium sets each combining a plurality of information storage media. A plurality of stripes are formed in the disk array. It has redundancy for enabling data restoration when the data of an information storage medium in at least one information storage medium set composing a stripe cannot be reproduced. Moreover, data composing one stripe is recorded at physically different positions of information storage media in the information storage medium sets. In this state, the reproduction control method of the present embodiment involves a step of restraining data reproduction in a predetermined region range immediately after a change of the information storage medium in an information storage medium set, and a step of restoring the data in the predetermined region range from the data which are reproduced from the remaining information storage medium sets, excluding the information storage medium set whose data reproduction has been restrained.

With this construction, continuous data reproduction is enabled even when changing information storage media, without suspending data reproduction.

Although Embodiment 5 illustrates that unused areas **201** are provided at the leading ends of the first information storage media in the medium sets **2A** to **4A,** they may be provided at the trailing ends of the first information storage media in the medium sets **2A** to **4A.** The requirement is that there be a difference of size t between each sum total of unused areas **201** of the first information storage media in the medium sets **1A** to **4A.** For example, unused areas **201** may be dispersedly provided in the first information storage media in the medium sets **1A** to **4A,** with respective sum totals of 2t, 3t, 4t, and 5t. Similarly, although it is illustrated that unused areas **201** are provided at the trailing ends of the last information storage media in the medium sets **1A** to **3A,** unused areas **201** may be provided at the leading ends of the last information storage media in the medium sets **1A** to **3A.** The requirement is that there be a difference of size t between each sum total of unused areas **201** of the last information storage media in the medium sets **1A** to **4A.** For example, unused areas **201** may be dispersedly provided in the last information storage media of the medium sets **1A** to **4A,** with respective sum totals of 5t, 4t, 3t, and 2t.

Furthermore, in the case of information storage media having spare areas **221,** rather than providing unused areas **201** in the user data regions, the size of the spare area **221** existing in each first information storage medium in the medium sets **1A** to **4A** may be made different by a size t, thus introducing a difference of size t between the size of each user data region. Similarly, the size of the spare area **221** existing in each last information storage medium in the medium sets **1A** to **4A** may be made different by a size t, thus introducing a difference of size t between the size of each user data region. For example, the spare areas **221** of the first information storage media in the medium sets **1A** to **4A** may have sizes *α*, *α*+t, *α*+2t, and *α*+3t, respectively, and the spare areas **221** of the last information storage media in the medium sets **1A** to **4A** may have sizes *α*+3t, *α*+2t, *α*+t, and *α*, respectively. Herein, *α* may be any arbitrary size.

### (Embodiment 6)

In Embodiment 6, an information storage medium set combining a plurality of information storage media each having a plurality of recording layers is accommodated in each of cabinets **111** to **114,** so that one information storage medium in the information storage medium set is carried to a recording/reproduction device **107** to **110** by a carriage **115** to **118.** RAIDS is constructed with four information storage medium sets which are mountable to the recording/reproduction devices **107** to **110.**

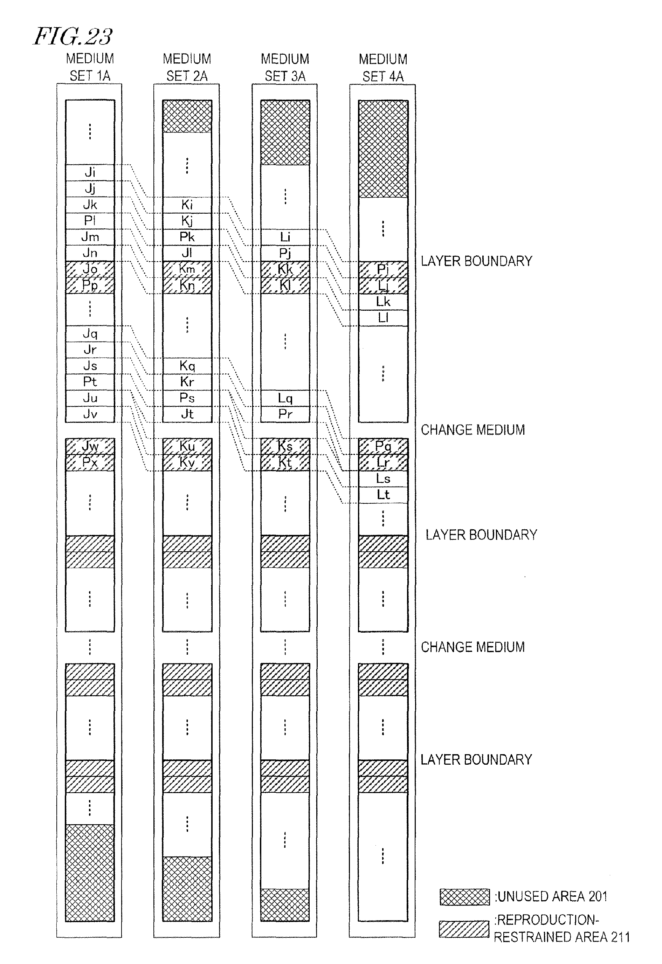

FIG. **23** shows a state of stripes near switching between recording layers and changes of information storage media in the information storage medium sets of Embodiment 6.

In FIG. **23****,** a medium set **1A** is a set of plural information storage media mountable to the recording/reproduction device **107.** A medium set **2A** is a set of plural information storage media mountable to the recording/reproduction device **108.** A medium set **3A** is a set of plural information storage media mountable to the recording/reproduction device **109.** A medium set **4A** is a set of plural information storage media mountable to the recording/reproduction device **110.** Similarly to Embodiment 5, an unused area **201** of a respectively different size is provided at the leading end of the first information storage medium in each of the medium sets **2A** to **4A,** and also an unused area **201** of a respectively different size is provided at the trailing end of the last information storage medium in each of the medium sets **1A** to **3A,** in Embodiment 6.

In FIG. **23****, Ji** of the medium set **1A, Ki** of the medium set **2A, Li** of the medium set **3A,** and **Pi** of the medium set **4A** together compose a stripe. Similarly, **Jj** of the medium set **1A, Kj** of the medium set **2A, Pj** of the medium set **3A,** and **Lj** of the medium set **4A** together compose a stripe. **Jk** of the medium set **1A, Pk** of the medium set **2A, Kk** of the medium set **3A,** and **Lk** of the medium set **4A** together compose a stripe. **Pl** of the medium set **1A, J1** of the medium set **2A, Kl** of the medium set **3A,** and **Ll** of the medium set **4A** together compose a stripe. Moreover, **Jq** of the medium set **1A, Kq** of the medium set **2A, Lq** of the medium set **3A,** and **Pq** of the medium set **4A** together compose a stripe. Similarly, **Jr** of the medium set **1A, Kr** of the medium set **2A,** Pr of the medium set **3A,** and **Lr** of the medium set **4A** together compose a stripe. **Js** of the medium set **1A,** Ps of the medium set **2A, Ks** of the medium set **3A,** and **Ls** of the medium set **4A** together compose a stripe. **Pt** of the medium set **1A, Jt** of the medium set **2A, Kt** of the medium set **3A,** and **Lt** of the medium set **4A** together compose a stripe.

An operation when the information storage medium library array apparatus **100** reproduces data near a switching between recording layers in an information storage medium in an information storage medium set shown in FIG. **23** will be described.

The array controller **101** restrains the information storage medium library device **106** from reproducing data in **Pi** and **Lj,** which are located immediately after switching of recording layers in an information storage medium in the medium set **4A** in FIG. **23****.** In the meanwhile, from the data which are reproduced by the remaining information storage medium library devices **103** to **105** from **Ji** of the medium set **1A, Ki** of the medium set **2A,** and **Li** of the medium set **3A,** the array controller **101** restores the data in **Pi** of the medium set **4A;** and from the data which are reproduced by the information storage medium library devices **103** to **105** from **Jj** of the medium set **1A, Kj** of the medium set **2A,** and **Pj** of the medium set **3A,** the array controller **101** restores the data in **Lj** of the medium set **4A.** Herein, during the data restoration while restraining data reproduction in **Pi** and **Lj** of the medium set **4A,** the information storage medium library device **106** performs switching to the recording layer to be reproduced and prepares itself to reproduce **Lk,** which is the subsequent region of **Lj.** Similarly, the array controller **101** restrains the information storage medium library devices **105, 104,** and **103** from reproducing data in, respectively: **Kk** and **Kl,** which are located immediately after switching of recording layers in an information storage medium in the medium set **3A** of FIG. **23****; Km** and **Kn,** which are located immediately after switching of recording layers in an information storage medium in the medium set **2A;** and **Jo** and **Pp**, which are located immediately after switching of recording layers in an information storage medium in the medium set **1A.** From the data which are reproduced by the remaining three of the information storage medium library devices **103** to **106** from the information storage media in the other information storage medium sets composing the same stripe, the array controller **101** restores the data whose reproduction has been restrained.

In this manner, similarly for any other switching between recording layers, the information storage medium library array apparatus **100** restrains data reproduction immediately after switching of recording layers in the information storage medium, restores data from the data which are reproduced from the information storage media in the other information storage medium sets, and, during the data restoration while restraining data reproduction, performs switching of recording layers and prepares itself to reproduce a subsequent portion to the region in which reproduction has been restrained, whereby continuous data reproduction is enabled even upon switching between recording layers, without suspending data reproduction.

In the case where the region in which data reproduction has been restrained is a parity block, data whose reproduction has been restrained does not need to be restored from data which are reproduced from the information storage media in other information storage medium sets. For example, **Pi** of the medium set **4A** and **Pp** of the medium set **1A** in FIG. **23** do not need to be restored.

Next, an operation when the information storage medium library array apparatus **100** reproduces data near a change of the information storage medium in an information storage medium set shown in FIG. **23** will be described.

The array controller **101** restrains the information storage medium library device **106** from reproducing data in **Pq** and **Lr,** which are located immediately after a change of the information storage medium in the medium set **4A** in FIG. **23****.** In the meanwhile, from the data which are reproduced by the remaining information storage medium library devices **103** to **105** from **Jq** of the medium set **1A, Kq** of the medium set **2A,** and **Lq** of the medium set **3A,** the array controller **101** restores data in **Pq** of the medium set **4A;** and from the data which are reproduced by the information storage medium library devices **103** to **105** from **Jr** of the medium set **1A, Kr** of the medium set **2A,** and **Pr** of the medium set **3A,** the array controller **101** restores data in **Lr** of the medium set **4A.** Herein, during the data restoration while restraining data reproduction from **Pq** and **Lr** of the medium set **4A,** the information storage medium library device **106** changes the information storage medium to reproduce from in the medium set **4A,** and prepares itself to reproduce **Ls,** which is the subsequent region of **Lr.** Similarly, the array controller **101** restrains the information storage medium library devices **105, 104,** and **103** from reproducing data in, respectively: **Ks** and **Kt,** which are located immediately after a change of the information storage medium in the medium set **3A** in FIG. **23****; Ku** and **Kv,** which are located immediately after a change of the information storage medium in the medium set **2A;** and **Jw** and **Px,** which are located immediately after a change of the information storage medium in the medium set **1A.** From the data which are reproduced by the remaining three of the information storage medium library devices **103** to **106** from the information storage media in the other information storage medium sets composing the same stripe, the array controller **101** restores the data whose reproduction has been restrained.

In this manner, similarly upon any other change of an information storage medium, the information storage medium library array apparatus **100** restrains data reproduction immediately after a change of the information storage medium, restores the data whose reproduction has been restrained from the data which are reproduced from the information storage media in the other information storage medium sets, and, during the data restoration while restraining data reproduction, performs changing of information storage media and prepares itself to reproduce a subsequent portion to the region whose reproduction has been restrained, whereby continuous data reproduction is enabled even when changing information storage media, without suspending data reproduction.

Thus, the information storage medium library array apparatus of the present embodiment includes a plurality of information storage medium library devices each having a recording/reproduction device, a cabinet, and a carriage. In this state, in the cabinet of each information storage medium library device, an information storage medium set combining a plurality of information storage media each having a plurality of recording layers is accommodated. Then, in each information storage medium library device, an information storage medium in the information storage medium set is carried between the cabinet and the recording/reproduction device by the carriage, and the recording/reproduction device performs data reproduction. A disk array is constituted by the information storage medium sets accommodated in the cabinets of the respective information storage medium library devices. A plurality of stripes are formed in the disk array. It has redundancy for enabling data restoration when the data in at least one information storage medium set composing a stripe cannot be reproduced. In this state, data composing one stripe is placed at physically different positions of the information storage media in the information storage medium sets. As a result of this, the information storage medium library array apparatus ensures that the timing of switching recording layers of the information storage medium and the timing of changing the information storage medium in the information storage medium set are different among the information storage medium library devices. Then, each information storage medium library device restrains data reproduction in a predetermined region range immediately after switching of recording layers in the information storage medium and a predetermined region range immediately after a change of the information storage medium in the information storage medium set. Then, the information storage medium library array apparatus restores the data in the predetermined region ranges from the data reproduced by the remaining information storage medium library devices, excluding the information storage medium library device which has been restrained from reproducing data.

With this construction, continuous data reproduction is enabled even upon switching between recording layers, without suspending data reproduction. Also, continuous data reproduction is enabled even upon changing the information storage media, without suspending data reproduction.

Moreover, while restoring the data in the predetermined region range, the information storage medium library array apparatus of the present embodiment may perform switching to the recording layer to be reproduced in the information storage medium and prepare itself to reproduce data in a subsequent region of the region in which data reproduction has been restrained, in the information storage medium library device in which data reproduction has been restrained.

Moreover, while restoring the data in the predetermined region range, the information storage medium library array apparatus of the present embodiment may change the information storage medium to be reproduced in the information storage medium set in the information storage medium library device that has been restrained from reproducing data.

In the case where the region in which data reproduction has been restrained is a parity block, data whose reproduction has been restrained does not need to be restored from data which are reproduced from the information storage media in other information storage medium sets. For example, **Pq** of the medium set **4A** and **Px** of the medium set **1A** in FIG. **23** do not need to be restored.

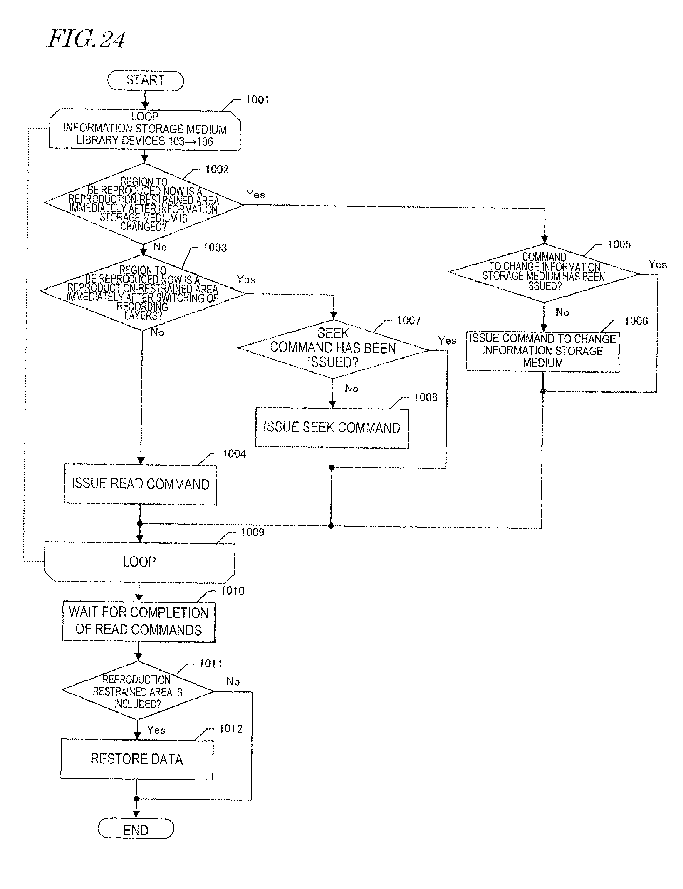

FIG. **24** is a flowchart showing a reproduction operation of the information storage medium library array apparatus **100** according to Embodiment 6.

The array controller **101** repeats the steps between step **1001** and step **1009** for each of the information storage medium library devices **103** to **106.**

At step **1002,** the array controller **101** determines whether the region which is going to be reproduced now is a reproduction-restrained area **211** immediately after a change of the information storage medium. If it is not a reproduction-restrained area **211,** control proceeds to step **1003;** if it is a reproduction-restrained area **211,** control proceeds to step **1005.**

At step **1003,** the array controller **101** determines whether the region which is going to be reproduced now is a reproduction-restrained area **211** immediately after switching of recording layers. If it is not a reproduction-restrained area **211,** control proceeds to step **1004;** if it is a reproduction-restrained area **211,** control proceeds to step **1007.**

At step **1004,** the array controller **101** issues a READ command to the targeted information storage medium library device (one of **103** to **106),** and proceeds to a detection of termination of repetition of steps **1001** to **1009.**

At step **1005,** the array controller **101** determines whether a command to change the information storage medium has already been issued for the targeted information storage medium library device (one of **103** to **106)**. If it has not been issued, control proceeds to step **1006;** if it has been issued, control proceeds to a detection of termination of repetition of steps **1001** to **1009.**

At step **1006,** the array controller **101** issues a command to the targeted information storage medium library device (one of **103** to **106**) to change the information storage medium, and proceeds to a detection of termination of repetition of steps **1001** to **1009.** Note that, after the change, data reproduction in the reproduction-restrained area **211** is not performed.

At step **1007,** the array controller **101** determines whether a SEEK command to a subsequent portion to the reproduction-restrained area **211** has already been issued for the targeted information storage medium library device (one of **103** to **106).** If it has not been issued, control proceeds to step **1008;** if it has been issued, control proceeds to a detection of termination of repetition of steps **1001** to **1009.**

At step **1008,** the array controller **101** issues a command to the targeted information storage medium library device (one of **103** to **106**) to SEEK a subsequent portion to the reproduction-restrained area **211,** and proceeds to a detection of termination of repetition of steps **1001** to **1009.** As a result of this, data reproduction is not performed in the reproduction-restrained area **211.**

When the processes for each of the information storage medium library devices **103** to **106** are completed, control proceeds to step **1010.**

At step **1010,** the array controller **101** waits for the completion of the READ commands having been issued at step **1004.** When all READ commands issued at step **1004** are completed, control proceeds to step **1011.**

At step **1011,** the array controller **101** determines whether any region has had its reproduction restrained with respect to any of the information storage medium library devices **103** to **106.** If any reproduction-restrained area **211** is included, control proceeds to step **1012;** if no reproduction-restrained area **211** is included, the process is ended. As has been stated earlier, even when a reproduction-restrained area **211** exists, there is no need to proceed to step **1012** if it is a parity block.

At step **1012,** by using the reproduced data from the other information storage medium library devices (the other three of **103** to **106**), the array controller **101** restores the data in the region in which reproduction has been restrained, and the process is ended.

Through the above steps, the information storage medium library array apparatus **100** is able to restrain reproduction in regions immediately after switching of recording layers and immediately after a change of the information storage medium, and restore the data in the regions in which reproduction has been restrained by using reproduced data from the other information storage medium library devices.

Thus, in the information storage medium library array apparatus according to the reproduction control method of the present embodiment, a disk array is constituted by a plurality of information storage medium sets each combining a plurality of information storage media each having a plurality of recording layers. A plurality of stripes are formed in the disk array. It has redundancy for enabling data restoration when the data of an information storage medium in at least one information storage medium set composing a stripe cannot be reproduced. Moreover, data composing one stripe is recorded at physically different positions of the information storage media in the information storage medium sets. In this state, the reproduction control method of the present embodiment involves a step of restraining data reproduction in a predetermined region range immediately after switching of recording layers in an information storage medium, a step of restraining data reproduction in a predetermined region range immediately after a change of the information storage medium in the information storage medium set, and a step of restoring the data in the predetermined region ranges from the data which are reproduced from the remaining information storage medium sets, excluding the information storage medium set whose data reproduction has been restrained.

With this construction, continuous data reproduction is enabled even upon switching between recording layers, without suspending data reproduction. Also, continuous data reproduction is enabled even upon changing the information storage media, without suspending data reproduction.

In Embodiment 6, if the amount of time required for switching of recording layers in an information storage medium and preparing to reproduce a subsequent portion to the region in which data reproduction has been restrained is shorter than the amount of time required for changing an information storage medium and preparing to reproduce a subsequent portion to the region in which data reproduction has been restrained, then the number of stripes in which to restrain data reproduction immediately after switching of recording layers in the information storage medium may be set smaller than the number of stripes in which to restrain data reproduction immediately after a change of the information storage medium. In other words, the number of stripes in which to restrain data reproduction immediately after a change of the information storage medium may be a number of stripes corresponding to the size t which was described in Embodiment 5, and the number of stripes in which to restrain data reproduction immediately after switching of recording layers in the information storage medium may be a number of stripes corresponding to a size which is smaller than the size t.

Although Embodiment 6 illustrates that unused areas 201 are provided at the leading ends of the first information storage media in the medium sets **2A** to **4A,** unused areas **201** may be dispersedly provided at the leading end and at the trailing end of the first information storage medium in each medium set **2A** to **4A.** Similarly, although it is illustrated that unused areas **201** are provided at the trailing ends of the last information storage media in the medium sets **1A** to **3A,** unused areas **201** may be dispersedly provided at the leading end and at the trailing end of the last information storage medium of each medium set **1A** to **3A.**

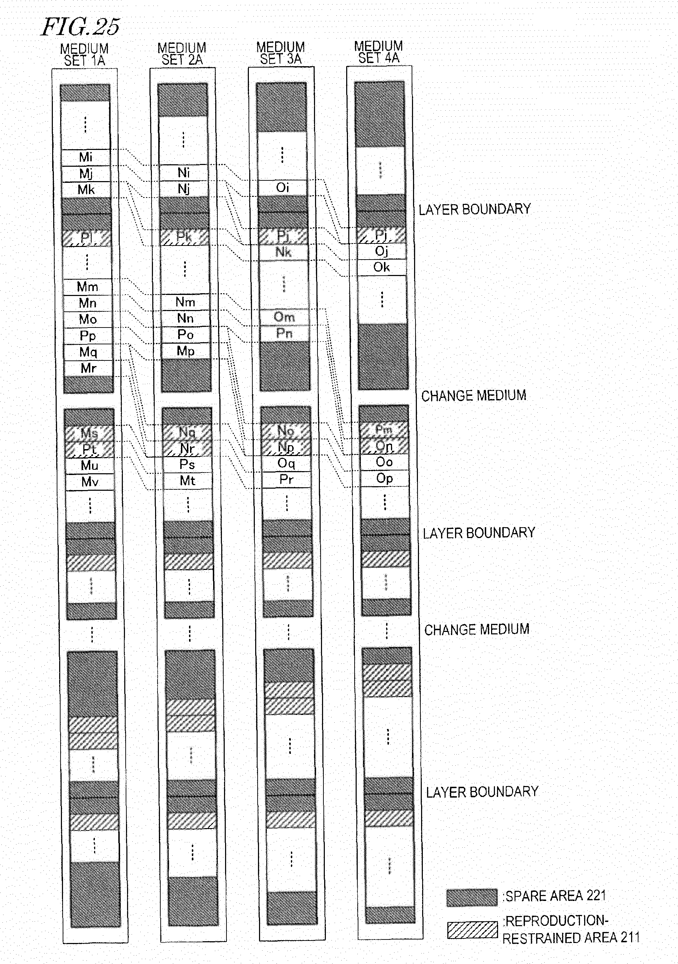

Furthermore, in the case of information storage media having spare areas **221,** rather than providing unused areas **201** in the user data regions, size adjustment of the spare areas **221** may be utilized to introduce a difference of size 2u between the size of each user data region of the first information storage media in the medium sets **1A** to **4A.** Herein, the size 2u is a number of stripes corresponding to the size t which was described in Embodiment 5. Similarly, a difference of size 2u may be introduced between the size of each user data region of the last information storage media in the medium sets **1A** to **4A.** An example will be described with reference to FIG. **25****.** In FIG. **25****,** the spare areas **221** are dispersedly provided at the leading end, a layer boundary, and the trailing end of the information storage medium so that, in the first information storage media in the medium sets **1A** to **4A,** they have sizes of *β*, *β*+2u, *β*+4u, and *β*+6u, respectively. Herein, *β* is an arbitrary size. Moreover, the spare areas **221** the spare areas **221** are dispersedly provided at the leading end, a layer boundary, and the trailing end of the information storage medium so that, in the last information storage media in the medium sets **1A to 4A,** they have sizes of *γ*+6u, *γ*+4u, *γ*+2u, and *γ*, respectively. Herein, *γ* is an arbitrary size, to which the same value as *β* may be set. In the remainder of the information storage media excluding the first and last in the medium sets **1A** to **4A,** the size of the spare areas **221** is all *δ*. Herein, *δ* is an arbitrary size, to which the same value as *β* or *γ* may be set. The blocks composing any stripe are shifted by u each in the first and last information storage media in the medium sets **1A** to **4A,** whereas the blocks composing any stripe are shifted by 2u each in the remainder of the information storage media. By prescribing u for the region in which to restrain data reproduction immediately after switching of recording layers, and prescribing 2u for the region in which to restrain data reproduction immediately after a change of the information storage medium, based on an implementation as described in Embodiment 6, it becomes possible to continuously reproduce data upon switching between recording layers or when changing information storage media, without suspending data reproduction.

While the above description has been directed to the case where reproduction errors are absent, the scenario under the presence of reproduction errors will additionally be described. If a reproduction error occurs in a stripe that contains a region in which to restrain reproduction near a switching of recording layers or near a change of the information storage medium, it is possible to recover from the reproduction error by exploiting stripe redundancy, through reproduction of data from the region in which reproduction has been restrained. Of course, this will result in a disruption in continuous data reproduction; therefore, it is desirable to decide whether to continue while leaving the reproduction error as it is, or take time to restore the data that is suffering from the reproduction error, depending of on the attribute of the reproduced data (whether it is of a real-time attribute or not). It will be appreciated that, in the case of a stripe which does not contain any region to restrain reproduction, it is possible to recover from a reproduction error without sacrificing continuity of data reproduction, by utilizing stripe redundancy.

Reproduction operations by the information storage medium library array apparatus **100** have been described above. Now, a recording operation will be described.

In FIG. **15****,** the array controller **101** allows data for recording to be temporarily retained in the cache memory **102,** and by requesting the information storage medium library devices **103** to **106** to record the data that is retained in the cache memory **102,** causes it to be recorded on the information storage media.

In the case of recording data which requires realtimeness, generally speaking, the rate of recording data of the information storage medium library array apparatus 100 is lower than the recording rate of the information storage medium library array apparatus to information storage media at normal times. Therefore, even if switching of recording layers in an information storage medium having a plurality of recording layers or change of the information storage medium occurs during the recording of data which requires realtimeness, by providing a cache memory **102** with a sufficient capacity for retaining recording data that arrives during the time required for the switching of recording layers or the change of the information storage medium, it is possible to continuously record data without suspending the recording data for the information storage medium library device **100.**

Although the above-described present embodiments illustrate scenarios under four recording/reproduction devices, similar implementation is possible with three or more recording/reproduction devices. Moreover, other than RAIDS, similar implementation is also possible by adopting RAID4 or RAID6 as the RAID level to be used.

Thus, although the present invention has been illustrated with respect to specific embodiments, it would be clear to those skilled in the art that many other variants, modifications, and other usages are encompassed by the present invention. Therefore, the present invention is only to be limited by the claims, rather than being limited to the specific embodiments herein.

### INDUSTRIAL APPLICABILITY

By having a controller which assigns the same logical sector number to different physical sector numbers, the optical disk array apparatus according to the present invention is able to enhance data reliability, thereby being useful as a storage server or the like. Moreover, the present invention is applicable to archiving devices for computer systems, for example.

### REFERENCE SIGNS LIST

- **1, 30, 60**: controller
- **2, 3, 31, 32, 33, 34, 61, 62, 63, 64**: drive
- **4, 5, 36, 37, 38, 39, 66, 67, 68, 69**: optical disk
- **6, 35, 65**: optical disk array apparatus
- **10**: lead-in zone
- **11**: data zone
- **12**: lead-out zone
- **20**: inner spare area
- **21**: data area
- **22**: outer spare area
- **100**: information storage medium library array apparatus
- **101**: array controller
- **102**: cache memory
- **103** to **106**: information storage medium library device
- **107** to **110**: recording/reproduction device
- **111** to **114**: cabinet
- **115** to **118**: carriage

## Claims

1. An optical disk array apparatus having a plurality of recording/reproduction devices for performing data recording and reproduction on an optical disk, the optical disk array apparatus comprising
an assignment section for assigning a smallest logical sector number of an optical disk mounted in one of the plurality of recording/reproduction devices to a physical sector number that is different from a physical sector number to which a smallest logical sector number of an optical disk mounted in at least one of the other recording/reproduction devices is assigned.

2. The optical disk array apparatus of claim 1, wherein the assignment section assigns smallest logical sector numbers of the respective optical disks mounted in the plurality of recording/reproduction devices to mutually different physical sector numbers.

3. The optical disk array apparatus of claim 1, further comprising a determination section for determining stampers used for producing the respective optical disks mounted in the plurality of recording/reproduction devices, wherein
the assignment section assigns smallest logical sector numbers of optical disk sharing a same stamper to mutually different physical sector numbers.

4. The optical disk array apparatus of claim 1 or 2, wherein,
each optical disk includes a data area and a spare area; and
the assignment section assigns a respectively different size for the spare area which is at a leading end of the data area of each optical disk.

5. The optical disk array apparatus of claim 4, wherein the assignment section ensures a size assignment so that a total of a size of the spare area at the leading end of the data area and a size of the spare area at a trailing end of the data area is mutually equal among the plurality of optical disks.

6. The optical disk array apparatus of any of claims 1 to 3, wherein,
each optical disk includes a data area; and
in an optical disk whose smallest logical sector number is assigned to a physical sector number not corresponding to a leading end of the data area, the assignment section allows a next logical sector number to a logical sector number which is assigned to a physical sector number corresponding to a trailing end of the data area to be assigned to a physical sector number corresponding to the leading end of the data area.

7. An optical disk array apparatus for reproducing data from optical disks,
the optical disk array apparatus comprising a plurality of optical disk library devices each including a recording/reproduction device, a cabinet, and a carriage,
the cabinet accommodating a plurality of optical disks, and
the optical disk being carried by the carriage between the cabinet and the recording/reproduction device for permitting data reproduction by the recording/reproduction device, wherein,
a disk array is constituted by the plurality of optical disks in the plurality of optical disk library devices;
stripes are recorded in the disk array;
the stripes have redundancy for enabling, when data fails to be reproduced in at least one of the plurality of optical disks in which data composing a same stripe is recorded, restoration of the data failing to be reproduced;
data composing a same stripe is recorded at physically different positions of the plurality of optical disks, so that mutually different timings for optical disk changing exist among the plurality of optical disk library devices;
the optical disk library device avoids reproducing data in a predetermined region range immediately after optical disk changing; and
the data in the predetermined region range is restored from data reproduced by the optical disk library devices other than the optical disk library device avoiding data reproduction in the predetermined region range.

8. The optical disk array apparatus of claim 7, wherein the optical disk library device avoiding data reproduction in the predetermined region range performs the optical disk changing while restoring the data.

9. The optical disk array apparatus of claim 7 or 8, wherein,
each of the plurality of optical disks has a plurality of recording layers;
data composing a same stripe is recorded at physically different positions of the plurality of optical disks, so that mutually different timings for recording layer switching exist among the plurality of optical disk library devices;
the optical disk library device avoids reproducing data in a predetermined region range immediately after recording layer switching; and
the data in the predetermined region range immediately after recording layer switching is restored from data reproduced by the optical disk library devices other than the optical disk library device avoiding data reproduction in the predetermined region range immediately after recording layer switching.

10. The optical disk array apparatus of claim 9, wherein, while the data is being restored, the optical disk library device avoiding data reproduction in the predetermined region range immediately after recording layer switching switches recording layers and prepares itself to reproduce data in a subsequent region of the predetermined region range.

11. The optical disk array apparatus of any of claims 7 to 10, wherein,
the optical disks have a leading spare area and a trailing spare area; and
data composing a same stripe is recorded at physically different positions of the plurality of optical disks by varying a ratio between sizes of the leading spare area and the trailing spare area among the plurality of optical disks constituting the disk array.

12. A reproduction method for reproducing data from a disk array composed of a plurality of optical disks, wherein,
stripes are recorded in the disk array;
the stripes have redundancy for enabling, when data fails to be reproduced in at least one of the plurality of optical disks in which data composing a same stripe is recorded, restoration of the data failing to be reproduced;
data composing a same stripe is recorded at physically different positions of the plurality of optical disks; and
each optical disk composing the disk array is changeable to another optical disk,
the reproduction method comprising:
a step of avoiding data reproduction in a predetermined region range immediately after optical disk changing; and
a step of restoring the data in the predetermined region range from data which is reproduced from the remaining optical disks composing the disk array excluding an optical disk in which data reproduction in the predetermined region range is avoided.
